(19) Europäisches Patentamt / European Patent Office / Office européen des brevets

(11) **EP 4 525 520 A1**

(12) **EUROPEAN PATENT APPLICATION**
published in accordance with Art. 153(4) EPC

(43) Date of publication:
**19.03.2025  Bulletin 2025/12**

(21) Application number: **23823025.4**

(22) Date of filing: **08.06.2023**

(51) International Patent Classification (IPC):
***H04W 36/00*** (2009.01)

(52) Cooperative Patent Classification (CPC):
**H04W 36/00; H04W 36/06**

(86) International application number:
**PCT/CN2023/099212**

(87) International publication number:
**WO 2023/241457 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022  CN 202210690236**

(71) Applicant: **Huawei Technologies Co., Ltd.
Shenzhen, Guangdong 518129 (CN)**

(72) Inventors:
• **ZHANG, Yi
  Shenzhen, Guangdong 518129 (CN)**
• **SU, Hongjia
  Shenzhen, Guangdong 518129 (CN)**
• **LU, Lei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)  A communication method and apparatus are provided, and relate to the field of communication technologies, to reduce interference to a network device and improve communication reliability when a terminal device performs network device handover. The method may include: A terminal device receives a reference signal from one or more first network devices, and sends a first list to a second network device based on the reference signal, where the first list indicates the one or more first network devices. The terminal device receives a reference signal from one or more third network devices by using a first beam, and sends a second list to the second network device based on the reference signal, where the second list indicates the one or more third network devices. The terminal device receives first indication information that is from the second network device and that indicates a target network device, and performs handover to the target network device based on the first indication information, where the one or more first network devices and the one or more third network devices include the target network device.

FIG. 7

**Description**

This application claims priority to Chinese Patent Application No. 202210690236.7, filed with the China National Intellectual Property Administration on June 17, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a communication system, after a terminal device enters a connected state, a network device that provides a communication service for the terminal device (referred to as a serving network device for short below) may configure measurement information for the terminal device. The terminal device may measure a surrounding network device based on the measurement information, and report a measurement result to the serving network device.

Communication between a terminal device with large coverage and a high rate transmission requirement and a serving network device may cause interference to a surrounding network device. When load of the serving network device is large, the high rate transmission requirement of the terminal device makes the load of the serving network device heavier.

Based on this, the serving network device may determine, based on a measurement result reported by the terminal device, a network device corresponding to the measurement result. The serving network device may interact with the network device corresponding to the measurement result, to determine whether there is a network device for handover. If there is a network device for handover, the terminal device performs handover to the network device for handover, to reduce interference to the surrounding network device, and improve communication reliability.

However, if the serving network device determines, based on the measurement result of the terminal device, that there is no network device for handover around the terminal device, how the terminal device implements network device handover to reduce interference to the network device and improve communication reliability becomes an urgent technical problem to be resolved.

**SUMMARY**

Embodiments of this application provide a communication method and apparatus, to reduce interference to a network device and improve communication reliability when a terminal device performs network device handover.

According to a first aspect, an embodiment of this application provides a communication method. The method may include: A terminal device receives a reference signal from one or more first network devices, and sends a first list to a second network device based on the reference signal; the terminal device receives a reference signal from one or more third network devices by using a first beam, and sends a second list to the second network device based on the reference signal; the terminal device receives first indication information from the second network device; and the terminal device performs handover to a target network device based on the first indication information. The first list indicates the one or more first network devices. The second list indicates the one or more third network devices. The first indication information indicates the target network device. The one or more first network devices and the one or more third network devices include the target network device.

Based on the first aspect, the terminal device may determine a network device (namely, the one or more first network devices) near the terminal device in a non-beam manner, or may extend communication coverage in a beam manner, to determine a remote network device (namely, the one or more third network devices). A serving network device (namely, the second network device) may determine the target network device for the terminal device from the one or more first network devices and the one or more third network devices based on the first list and the second list that are reported by the terminal device. This extends a range of network devices for handover, increases a success rate of implementing network device handover by the terminal device, and further balances load of the network device.

In a possible design, the second list further indicates the one or more first network devices.

Based on the possible design, because communication coverage can be extended in a beam manner, when receiving the reference signal by using the first beam, the terminal device may receive the reference signal sent by the one or more third network devices, or may receive the reference signal sent by the one or more first network devices. When maintaining the second list, the terminal device may store identification information of the third network device in the second list, or may store identification information of the first network device in the second list.

In a possible design, the terminal device determines, based on preconfiguration or predefinition, to receive the reference signal from the one or more third network devices by using the first beam; or the terminal device receives second indication information from the second network device, and receives the reference signal from the one or more third network devices based on the second indication information by using the first beam, where the second indication information indicates the terminal device to receive the reference signal by using the first beam.

Based on the possible design, the terminal device may determine, based on the preconfiguration or the predefinition, to receive the reference signal by using the first beam, or may determine, based on the second indication information, to receive the reference signal by using the first beam. A plurality of feasible solutions are provided for the terminal device to determine to receive the reference signal by using the first beam.

In a possible design, the terminal device receives the reference signal from the one or more third network devices by using the first beam in a first frequency range.

Based on the possible design, the terminal device may further extend communication coverage by supporting a capability of a beam in the first frequency range (namely, an FR1). This extends a range of network devices for handover, increases a success rate of implementing network device handover by the terminal device, reduces interference to a network device near the terminal device, improves communication reliability, and balances load of the network device.

In a possible design, the terminal device sends capability information to the second network device, where the capability information indicates whether the terminal device supports beam receiving and/or sending in the first frequency range.

Based on the possible design, the terminal device may send the capability information to the second network device, to enable the second network device to determine, based on the capability information of the terminal device, whether to indicate the terminal device to receive the reference signal by using the first beam.

In a possible design, load of the target network device is less than or equal to a preset load value; a quantity of users served by the target network device is less than or equal to a preset quantity; a network device density corresponding to the target network device is less than or equal to a preset density; or a location of the target network device is outside a preset range.

Based on the possible design, the target network device may be determined in one or more of the foregoing manners, to provide a plurality of feasible solutions for determining the target network device.

According to a second aspect, an embodiment of this application provides a communication apparatus. The communication apparatus may be used in the terminal device in the first aspect or the possible design of the first aspect, to implement a function performed by the terminal device. The communication apparatus may be the terminal device, or may be a chip, a system on chip, or the like of the terminal device. The communication apparatus may implement, by executing corresponding software by hardware, the function performed by the terminal device. The hardware or the software includes one or more modules corresponding to the functions, for example, a transceiver module and a processing module. The transceiver module is configured to: receive a reference signal from one or more first network devices, and send a first list to a second network device based on the reference signal; and is further configured to: receive a reference signal from one or more third network devices by using a first beam, and send a second list to the second network device based on the reference signal. The transceiver module is further configured to receive first indication information from the second network device. The processing module is configured to perform handover to a target network device based on the first indication information. The first list indicates the one or more first network devices. The second list indicates the one or more third network devices. The first indication information indicates the target network device. The one or more first network devices and the one or more third network devices include the target network device.

In a possible design, the second list further indicates the one or more first network devices.

In a possible design, the transceiver module is specifically configured to: determine, based on preconfiguration or predefinition, to receive the reference signal from the one or more third network devices by using the first beam; or receive second indication information from the second network device, and receive the reference signal from the one or more third network devices based on the second indication information by using the first beam, where the second indication information indicates the terminal device to receive the reference signal by using the first beam.

In a possible design, the transceiver module is specifically configured to receive the reference signal from the one or more third network devices by using the first beam in a first frequency range.

In a possible design, the transceiver module is further configured to send capability information to the second network device, where the capability information indicates whether the terminal device supports beam receiving and/or sending in the first frequency range.

In a possible design, load of the target network device is less than or equal to a preset load value; a quantity of users served by the target network device is less than or equal to a preset quantity; a network device density corresponding to the target network device is less than or equal to a preset density; or a location of the target network device is outside a preset range.

It should be noted that for a specific implementation of the communication apparatus in the second aspect, refer to behavior functions of the terminal device in the communication method provided in the first aspect or any one of the possible designs of the first aspect.

According to a third aspect, an embodiment of this application provides a communication apparatus. The communication apparatus may be a terminal device, or a chip or a system on chip configured to implement a function of the terminal device. The communication apparatus may implement the function performed by the terminal device in the foregoing aspects or the possible designs, and the function may be implemented by hardware. In a possible design, the communication apparatus may include a transceiver and a processor. The transceiver and the processor may be configured to support the communication apparatus in implementing the function in the first aspect or any one of the possible designs of the first aspect. For example, the transceiver may be configured to: receive a reference signal from one or more first network devices, and send a first list to a second network device based on the reference signal; and may be further configured to: receive a reference signal from one or more third network devices by using a first beam, and send a second list to the second network device based on the reference signal. The transceiver may be further configured to receive first indication information from the second network device. The processor may be configured to perform handover to a target network device based on the first indication information. The first list indicates the one or more first network devices. The second list indicates the one or more third network devices. The first indication information indicates the target network device. The one or more first network devices and the one or more third network devices include the target network device. In another possible design, the communication apparatus may further include a memory. The memory is configured to store computer-executable instructions and data of the communication apparatus. When the communication apparatus runs, the transceiver and the processor execute the computer-executable instructions stored in the memory, so that the communication apparatus performs the communication method in the first aspect or any one of the possible designs of the first aspect.

For a specific implementation of the communication apparatus in the third aspect, refer to behavior functions of the terminal device in the communication method provided in the first aspect or any one of the possible designs of the first aspect.

According to a fourth aspect, an embodiment of this application provides a communication method. The method may include: A second network device receives a first list from a terminal device, and further receives a second list from the terminal device; and the second network device determines first indication information based on the first list and the second list, and sends the first indication information to the terminal device. The first list indicates one or more first network devices. The second list indicates one or more third network devices, and the one or more third network devices are determined by the terminal device by using a first beam. The first indication information indicates a target network device, and the one or more first network devices and the one or more third network devices include the target network device.

Based on the fourth aspect, the terminal device may determine a network device (namely, the one or more first network devices) near the terminal device in a non-beam manner, or may extend communication coverage in a beam manner, to determine a remote network device (namely, the one or more third network devices). A serving network device (namely, the second network device) may determine the target network device for the terminal device from the one or more first network devices and the one or more third network devices based on the first list and the second list that are reported by the terminal device. This extends a range of network devices for handover, increases a success rate of implementing network device handover by the terminal device, and further balances load of the network device.

In a possible design, before the second network device receives the second list from the terminal device, the method further includes: The second network device sends second indication information to the terminal device, where the second indication information indicates the terminal device to receive a reference signal by using the first beam.

Based on the possible design, the second network device may send the second indication information to the terminal device, to indicate the terminal device to receive the reference signal by using the first beam, to extend communication coverage. This extends a range of network devices for handover, increases a success rate of implementing network device handover by the terminal device, further reduces interference caused to a network device near the terminal device, improves communication reliability, and balances load of the network device.

In a possible design, the second network device receives capability information from the terminal device, where the capability information indicates whether the terminal device supports beam receiving and/or sending in a first frequency range; and when the terminal device supports beam receiving and/or sending in the first frequency range, the second network device sends the second indication information to the terminal device.

Based on the possible design, the second network device determines, based on the capability information of the terminal device, whether to indicate the terminal device to receive the reference signal by using the first beam. When the terminal device supports beam receiving and/or sending in the first frequency range, the second network device may indicate the terminal device to receive the reference signal by using the first beam, to extend communication coverage. This extends a range of network devices for handover, increases a success rate of implementing network device handover by the terminal device, further reduces interference caused to a network device near the terminal device, improves communication reliability, and balances load of the network device.

In a possible design, the second list further indicates the one or more first network devices.

Based on the possible design, because communication coverage can be extended in a beam manner, when receiving the reference signal by using the first beam, the terminal device may receive the reference signal sent by the one or more third network devices, or may receive the reference signal sent by the one or more first network devices. When maintaining the second list, the terminal device may store identification information of the third network device in the second list, or may store identification information of the first network device in the second list.

In a possible design, the second network device determines the target network device from the one or more first network devices and the one or more third network devices based on one or more of the following parameters: load of a network device, a quantity of users served by the network device, a network device density corresponding to the network device, or a location of the network device.

Based on the possible design, the second network device may determine the target network device based on the foregoing one or more parameters, to provide a plurality of feasible solutions for the second network device to determine the target network device.

In a possible design, load of the target network device is less than or equal to a preset load value; a quantity of users served by the target network device is less than or equal to a preset quantity; a network device density corresponding to the target network device is less than or equal to a preset density; or a location of the target network device is outside a preset range.

Based on the possible design, the target network device may be determined in one or more of the foregoing manners, to provide a plurality of feasible solutions for determining the target network device.

According to a fifth aspect, an embodiment of this application provides a communication apparatus. The communication apparatus may be used in the network device in the fourth aspect or the possible designs of the fourth aspect, to implement a function performed by the network device. The communication apparatus may be the network device, or may be a chip, a system on chip, or the like configured to implement the function of the network device. The communication apparatus may implement, by executing corresponding software by hardware, the function performed by the network device. The hardware or the software includes one or more modules corresponding to the functions, for example, a transceiver module and a processing module. The transceiver module is configured to receive a first list from a terminal device, and is further configured to receive a second list from the terminal device. The processing module is configured to determine first indication information based on the first list and the second list. The transceiver module is further configured to send the first indication information to the terminal device. The first list indicates one or more first network devices. The second list indicates one or more third network devices, and the one or more third network devices are determined by the terminal device by using a first beam. The first indication information indicates a target network device, and the one or more first network devices and the one or more third network devices include the target network device.

In a possible design, before receiving the second list from the terminal device, the transceiver module is further configured to send second indication information to the terminal device, where the second indication information indicates the terminal device to receive a reference signal by using the first beam.

In a possible design, the transceiver module is configured to receive capability information from the terminal device, where the capability information indicates whether the terminal device supports beam receiving and/or sending in a first frequency range; and when the terminal device supports beam receiving and/or sending in the first frequency range, the transceiver module sends the second indication information to the terminal device.

In a possible design, the second list further indicates the one or more first network devices.

In a possible design, the processing module is specifically configured to determine the target network device from the one or more first network devices and the one or more third network devices based on one or more of the following parameters: load of a network device, a quantity of users served by the network device, a network device density corresponding to the network device, or a location of the network device.

In a possible design, load of the target network device is less than or equal to a preset load value; a quantity of users served by the target network device is less than or equal to a preset quantity; a network device density corresponding to the target network device is less than or equal to a preset density; or a location of the target network device is outside a preset range.

It should be noted that for a specific implementation of the communication apparatus in the fifth aspect, refer to behavior functions of the terminal device in the communication method provided in the fourth aspect or any one of the possible designs of the fourth aspect.

According to a sixth aspect, an embodiment of this application provides a communication apparatus. The communication apparatus may be a terminal device, or a chip or a system on chip configured to implement a function of the terminal device. The communication apparatus may implement the function performed by the terminal device in the foregoing aspects or the possible designs, and the function may be implemented by hardware. In a possible design, the communication apparatus may include a transceiver and a processor. The transceiver and the processor may be configured to support the communication apparatus in implementing the function in the fourth aspect or any one of the possible designs of the fourth aspect. For example, the transceiver may be configured to receive a first list from the terminal device, and is further configured to receive a second list from the terminal device. The processor may be configured to determine first indication information based on the first list and the second list. The transceiver may be further configured to send the first indication information to the terminal device. The first list indicates one or more first network devices. The second list indicates one or more third network devices, and the one or more third network devices are determined by the terminal device by using a first beam. The first indication information indicates a target network device, and the one or more first network devices and the one or more third network devices include the target network device. In another possible design, the communication apparatus may further include a memory. The memory is configured to store computer-executable instructions and data of the communication apparatus. When the communication apparatus runs, the transceiver and the processor execute the computer-executable instructions stored in the memory, so that the communication apparatus performs the communication method in the fourth aspect or any one of the possible designs of the fourth aspect.

For a specific implementation of the communication apparatus in the sixth aspect, refer to behavior functions of the terminal device in the communication method provided in the fourth aspect or any one of the possible designs of the fourth aspect.

According to a seventh aspect, an embodiment of this application provides a communication apparatus. The communication apparatus includes one or more processors. The one or more processors are configured to run a computer program or instructions. When the one or more processors execute the computer instructions or the instructions, the communication apparatus is enabled to perform the communication method in the first aspect or any one of the possible designs of the first aspect, or perform the communication method in the fourth aspect or any one of the possible designs of the fourth aspect.

In a possible design, the communication apparatus further includes one or more memories. The one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces. The one or more communication interfaces are coupled to the one or more processors, and the one or more communication interfaces are configured to communicate with a module other than the communication apparatus.

According to an eighth aspect, an embodiment of this application provides a communication apparatus. The communication apparatus includes an input/output interface and a logic circuit. The input/output interface is configured to input and/or output information. The logic circuit is configured to: perform the communication method in the first aspect or any one of the possible designs of the first aspect, or perform the communication method in the fourth aspect or any one of the possible designs of the fourth aspect, and perform processing based on the information and/or generate the information.

According to a ninth aspect, an embodiment of this application provides a computer-readable storage medium. The computer-readable storage medium stores computer instructions or a program. When the computer instructions or the program is run on a computer, the communication method in the first aspect or any one of the possible designs of the first aspect is performed, or the communication method in the fourth aspect or any one of the possible designs of the fourth aspect is performed.

According to a tenth aspect, an embodiment of this application provides a computer program product including computer instructions. When the computer program product runs on a computer, the communication method in the first aspect or any one of the possible designs of the first aspect is performed, or the communication method in the fourth aspect or any one of the possible designs of the fourth aspect is performed.

According to an eleventh aspect, an embodiment of this application provides a computer program. When the computer program is run on a computer, the communication method in the first aspect or any one of the possible designs of the first aspect is performed, or the communication method in the fourth aspect or any one of the possible designs of the fourth aspect is performed.

For technical effects brought by any design manner of the seventh aspect to the eleventh aspect, refer to technical effects brought by any possible design of the first aspect, or refer to technical effects brought by any possible design of the fourth aspect.

According to a twelfth aspect, a communication system is provided. The communication system may include the communication apparatus in either of the second aspect and the third aspect, and the communication apparatus in either of the fifth aspect and the sixth aspect.

**BRIEF DESCRIPTION OF DRAWINGS**

FIG. 1 is a diagram of a terrestrial cellular communication system according to an embodiment of this application;
FIG. 2 is a diagram of a terrestrial cellular communication system according to an embodiment of this application;
FIG. 3 is a diagram of a terrestrial cellular communication system according to an embodiment of this application;
FIG. 4 is a diagram of a communication system according to an embodiment of this application;
FIG. 5 is a diagram of a network device according to an embodiment of this application;
FIG. 6 is a diagram of composition of a communication apparatus according to an embodiment of this application;
FIG. 7 is a flowchart of a communication method according to an embodiment of this application;
FIG. 8 is a diagram of a communication system according to an embodiment of this application;
FIG. 9 is a flowchart of a communication method according to an embodiment of this application;
FIG. 10 is a flowchart of a communication method according to an embodiment of this application;
FIG. 11 is a diagram of composition of a terminal device according to an embodiment of this application;
FIG. 12 is a diagram of composition of a network device according to an embodiment of this application; and
FIG. 13 is a diagram of composition of a communication apparatus according to an embodiment of this application.

## DESCRIPTION OF EMBODIMENTS

Before embodiments of this application are described, technical terms used in embodiments of this application are described.

**A terrestrial cellular communication system** may include a network device and a terminal device. A signal radiation direction of the network device may be toward the ground, to better provide a communication service for a ground terminal device. For a terminal device in a high building, quality of a received signal of the network device may be poor. An indoor signal enhancement solution may be used. For example, a small base station is deployed indoors to resolve a problem of poor signal quality.

**Unmanned aerial vehicle (unmanned aerial vehicle, UAV) technology:** With mature development of unmanned aerial vehicle technologies, a price of an unmanned aerial vehicle continues to decline, the unmanned aerial vehicle is gradually widely applied, and a requirement for long-distance flight of the UAV is gradually proposed. Flight of most unmanned aerial vehicles is operated by a remote control, and therefore the unmanned aerial vehicles can be controlled to fly only in a line-of-sight range or a short distance. Military unmanned aerial vehicles can use satellite navigation for flight, but this manner is not suitable for large-scale promotion and application.

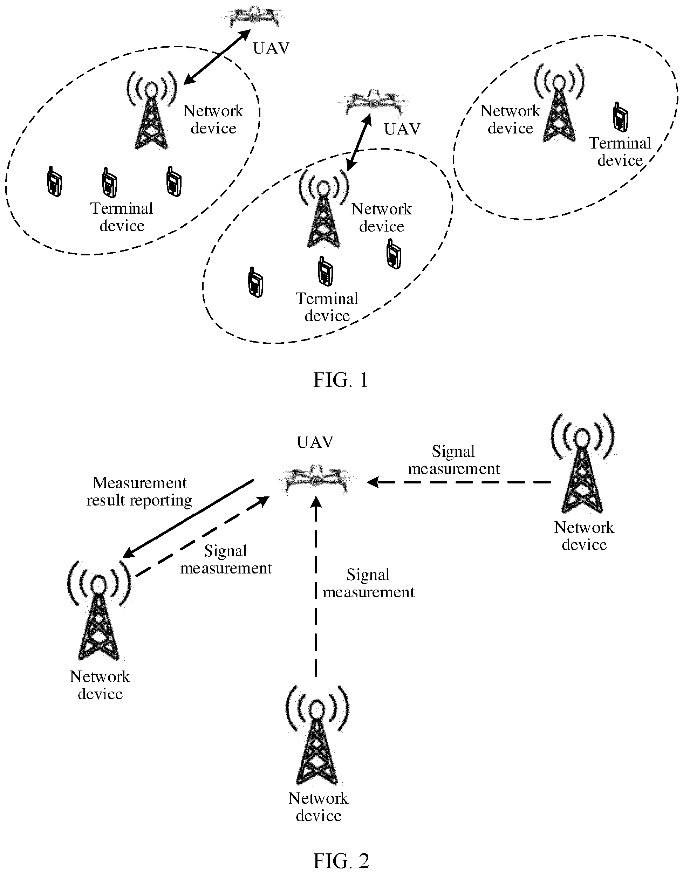

Based on the foregoing descriptions of the cellular communication system and the unmanned aerial vehicle, as shown in FIG. 1, if a terrestrial cellular communication system can support a UAV, a flight control command of the UAV may be transmitted over a long distance beyond line of sight, to help the UAV perform long-distance flight. In addition, information such as pictures or videos captured by the UAV can also be returned in real time at a high speed. This greatly facilitates development of the UAV industry. Many emerging use cases can benefit from connecting the UAV to a cellular network as a terminal device.

For example, UAV application scenarios may include one or more of the following:

1. Infrastructure monitoring, for example, oil and gas pipeline inspection or flight route arrangement, is performed in a large range. A remote control and image transmission distance can reach 100 kilometers, and a flight height range can reach 150 m. This use case requires real-time image transmission to reach a speed of 30 Mbps.
2. Air search is performed in a large range, and a flight environment, for example, a mountain area or a disaster area, is complex. A remote control and image transmission distance can reach below 10 km, and a flight height range can reach 300 m. This use case requires real-time image transmission to reach a speed of 30 Mbps.
3. A remote control and image transmission distance of a drone camera can reach below 10 km, and a flight height range can reach 500 m. This use case requires real-time image transmission to reach a speed of 30 Mbps.
4. Automated agriculture, for example, pesticide spraying, is implemented in a large range. A remote control distance can reach below 10 km, and a flight height range can reach 20 m. No real-time image transmission is required.
5. Packet delivery route arrangement: A remote control and image transmission distance can reach 50 km, and a flight height range can reach 300 meters.

In a cellular communication system, a terminal device may measure radio signal strength of a neighboring cell. For a terminal device on the ground, a quantity of neighboring cells that can be detected is usually less than 8 due to a reason such as building blocking. For a UAV, a flight height of the UAV may exceed a height of a network device, and the UAV can "see" dozens of surrounding network devices. To be specific, as shown in FIG. 2, the UAV may receive signals of a plurality of network devices based on signal measurement, and report a measurement result to a network device (namely, a serving network device) currently accessed by the UAV.

**Measurement reporting:** After a terminal device enters a connected state, a serving network device (to be specific, a network device currently accessed by the terminal device) may perform measurement-related configuration for the terminal device, and the terminal device performs measurement reporting to the serving network device based on the measurement-related configuration. Measurement reporting manners may include periodic reporting and event reporting. For periodic reporting, the serving network device may configure a reporting periodicity and a quantity of reporting times for the terminal device, and the terminal device may periodically report signal strength of a specified quantity of neighboring cells. For event reporting, if signal strength of a neighboring cell meets an entering condition of a preset measurement event, measurement reporting is triggered. In the two measurement reporting manners, event reporting is more widely applied. When the terminal device is a UAV, and when the UAV can find a large quantity of neighboring cells, a plurality of neighboring cells may all meet the entering condition of a measurement event, to trigger measurement reporting.

The serving network device may indicate, by using the measurement-related configuration, the terminal device to perform periodic reporting or event reporting. If periodic reporting is performed, the serving network device may indicate a specific reference signal class, a reporting time interval, a quantity of reporting times, a quantity of measured cells, and the like to the terminal device. If event reporting is performed, the serving network device may indicate a reference signal class, a reporting time interval, a quantity of reporting times, a specific event, a related threshold value or offset value, a time to trigger (time to trigger, to be specific, duration in which an event entering condition is continuously met, or described as time lag) value, and the like to the terminal device.

After receiving the measurement-related configuration, the terminal device starts a measurement process, obtains measurement results of a plurality of neighboring cells, and evaluates the measurement results. For one measurement event, when a cell meets an entering condition and meets a time to trigger time requirement, the cell is stored in a local cells triggered list (cellsTriggeredList) of the terminal device, and measurement reporting is triggered once. That is, the terminal device may locally maintain a list of cells that have triggered the measurement event, and sort the cells in descending order of signal strength.

In a measurement reporting process, when the terminal device (for example, the UAV) can detect signals of a plurality of cells, the serving network device may further configure a maximum quantity of reported cells (or described as a cell quantity threshold) for the terminal device. When a quantity of cells stored in local cellsTriggeredList of the terminal device reaches the cell quantity threshold, measurement reporting is triggered once again. In this case, the terminal device may report the cells triggered list stored by the terminal device. It should be noted that, after a quantity of cells that trigger the measurement event reaches the maximum quantity of reported cells, a new measurement event is not included in a measurement reporting result.

For example, event trigger reporting may be classified into an intra-frequency system event and an event between different systems. Intra-frequency handover reporting events may include the following:

(a) Event A1: When signal quality of a serving cell is higher than a specific threshold, and information about a cell that meets an event trigger condition is reported, the network device stops inter-frequency/inter-RAT measurement, where the threshold is used to determine that the terminal device stops an inter-frequency measurement action.

(b) Event A2: When signal quality of a serving cell is lower than a specific threshold, and information about a cell that meets an event trigger condition is reported, the network device starts inter-frequency/inter-RAT measurement, where the threshold is used to determine that the terminal device starts an inter-frequency measurement action.

(c) Event A3: When signal quality of an intra-frequency/inter-frequency neighboring cell is higher than that of a serving cell, and information about a cell that meets an event trigger condition is reported, a source station enables an intra-frequency/inter-frequency handover request.

(d) Event A4: When signal quality of an inter-frequency neighboring cell is higher than a specific threshold, and information about a cell that meets an event trigger condition is reported, a source station enables an inter-frequency handover request, where the threshold is used to process inter-frequency handover.

(e) Event A5: When signal quality of a serving cell is lower than a threshold 1, signal quality of an inter-frequency neighboring cell is higher than a threshold 2, and information about a cell that meets an event trigger condition is reported, a source station enables an inter-frequency handover request, where the threshold 1 and the threshold 2 are used to process inter-frequency handover.

Inter-frequency handover reporting events may include the following:

(a) Event B1: When quality of an inter-RAT neighboring cell is higher than a specific threshold, and information about a cell that meets an event trigger condition is reported, a source station enables an inter-RAT handover request, where the threshold is used to process inter-frequency handover.

(b) Event B2: When quality of a serving cell is lower than a threshold 1, quality of an inter-RAT neighboring cell is higher than a threshold 2, and information about a cell that meets an event trigger condition is reported, a source station enables an inter-RAT handover request, where the threshold 1 and the threshold 2 are used to process inter-frequency handover.

**Frequency range:** In a fifth generation (fifth generation, 5G) mobile communication system, frequencies are classified into two types: a frequency range 1 (frequency range 1, FR1) and a frequency range 2 (frequency range 2, FR2).

The FR1 is a frequency band of 410 MHz to 7125 MHz, and may also be referred to as a mid-low frequency. A frequency band below 6G in the FR1 may also be referred to as Sub 6G, and a frequency band below 3G in the FR1 may also be referred to as Sub 3G.

The FR2 is a frequency band of 24250 MHz to 52600 MHz, and may also be referred to as a high frequency, or may also be referred to as a millimeter-wave frequency band. Usually, a range of 24 GHz to 100 GHz may be referred to as a 5G millimeter wave.

Beam management is an important technology proposed for the FR2 in a 5G new radio (new radio, NR) communication system, refers to a process in which a network device and a terminal device obtain and maintain a set of beams used for sending and receiving, and is a reference workflow for beamforming in a multiple-input multiple-output (multiple-input multiple-output, MIMO) technology system.

**Beam management** may include the following four technical points:

> 1. beam determination (Beam Determination), which is a process in which the network device or the terminal device selects a transmit beam or a receive beam of the network device or the terminal device;
> 2. beam measurement (Beam Measurement), which is a process in which the network device or the terminal device measures a received beamforming signal;
> 3. beam reporting (Beam Reporting), which is a process in which the terminal device reports a beam measurement result to the network device; and
> 4. beam sweeping (Beam Sweeping), which is a process in which the network device or the terminal device sequentially selects, in a specified sweeping manner in a time period, a beam for sending or receiving, to cover a spatial region.

Beam management may be classified into three working states. Operations in the states are as follows:

> P-1: The terminal device measures a transmit beam set of the network device, and selects a transmit beam of the network device and a receive beam of the terminal device. The terminal device may select a beam with strongest signal quality from a plurality of beams.
> P-2: Based on P-1, the terminal device measures a BS transmit beam set at a smaller granularity, to improve the transmit beam of the network device.
> P-3: The terminal device measures a transmit beam of a same network device by using different receive beams, to improve the receive beam of the terminal device.

Based on the foregoing four technical points and the operations in the three states, downlink beam management is performed. A basic procedure of downlink beam management may be as follows: The network device configures a maximum of 64 beam directions, and each beam direction corresponds to one synchronization signal and physical broadcast channel block (synchronization signal and physical broadcast channel block, SSB) and a time-frequency resource that should be used by the terminal device to perform beam reporting. The network device sequentially sends the SSB in each direction in a sweeping manner. The terminal device may obtain reference signal received power (reference signal received power, RSRP) of the SSB by performing beam measurement. The terminal device may establish a correspondence between the measured SSB RSRP and a 6-bit SSB sequence number, to indicate a sequence number of an SSB with strongest RSRP to the network device, and notify the network device that the SSB is an SSB selected by the terminal device.

The terminal device may obtain three least significant bits from a physical broadcast channel (physical broadcast channel, PBCH) demodulation reference signal (demodulation reference signal, DMRS), obtain three most significant bits from a PBCH valid payload (payload) bit, and obtain a sequence number of a received SSB by combining the three least significant bits and the three most significant bits.

The PBCH DMRS may be generated based on a pseudo-random sequence, and a manner of carrying the three least significant bits of the SSB sequence number by the PBCH DMRS may be determining an initial value $c_{init}$ of the pseudo-random sequence by using the three bits.

For example, a process of generating the PBCH DMRS may be as follows:

$$r(n) = \frac{1}{\sqrt{2}}\big(1 - 2 \cdot c(2n)\big) + j\frac{1}{\sqrt{2}}\big(1 - 2 \cdot c(2n + 1)\big),$$

where

$r(n)$ is a PBCH DMRS sequence, $c(n)$ is the pseudo-random sequence, $c(2n)$ indicates an even number, and $c(2n + 1)$

indicates an odd number. $c(n)$ may be determined by using the following formula:

$$c(n) = \left(x_1(n + N_C) + x_2(n + N_C)\right) mod\ 2;$$

$$x_1(n + 31) = \left(x_1(n + 3) + x_1(n)\right) mod\ 2;$$

and

$$x_2(n + 31) = \left(x_2(n + 3) + x_2(n + 2) + x_2(n + 1) + x_2(n)\right) mod\ 2,$$

where

$N_c = 1600$, $x_1(n)$ and $x_2(n)$ are two m sequences, 31 initial values of $x_1(n)$ are $x_1(0) = 1$, and $x_1(n) = 0$, where $n = 1,2, ...,30$, and 31 initial values of $x_2(n)$ are determined by $c_{init} = \sum_{i=0}^{30} x_2(i) \cdot 2^i$ .

$c_{init}$ of the PBCH DMRS is set as follows:

$$c_{init} = 2^{11}(\bar{\iota}_{SSB} + 1)\left(\lfloor N_{ID}^{cell}/4 \rfloor + 1\right) + 2^6(\bar{\iota}_{SSB} + 1) + \left(N_{ID}^{cell}\ mod\ 4\right),$$

where

$N_{ID}^{cell}$ is a physical layer cell identifier. When a maximum quantity of SSBs is 4, $\bar{\iota}_{SSB} = i_{SSB} + 4n_{hf}$ , where $i_{SSB}$ indicates two least significant bits of the SSB sequence number, and $n_{hf}$ indicates whether the SSB is located in a front half or a rear half of a frame in which the SSB is located. If the SSB is located in the front half, $n_{hf} = 0$; or if the SSB is located in the rear half, $n_{hf} = 1$. When a maximum quantity of SSBs is 8 or 64, $\bar{\iota}_{SSB} = i_{SSB}$ , and it indicates the three least significant bits of the SSB sequence number.

The terminal device obtains the SSB sequence number by performing blind detection on the PBCH DMRS. Then, the terminal device selects an SSB set by comparing RSRP, and reports sequence numbers of SSBs in the set and corresponding RSRP to the network device on a given time-frequency resource. The network device performs beam determination by using reported information. In this way, an initial beam selection process is completed. A similar procedure is used for uplink beam management, but different reference signals are used.

Based on the foregoing descriptions of measurement reporting and beam management, for a terminal device (for example, a UAV) with large coverage and a high rate transmission requirement, communication between the terminal device and a serving network device may cause interference to a surrounding network device. When load of the serving network device is large, the high rate transmission requirement of the terminal device increases load burden of the serving network device.

Based on this, the serving network device may determine, based on a measurement result reported by the terminal device, a network device corresponding to the measurement result. The serving network device may interact with the network device corresponding to the measurement result, to determine whether there is a network device for handover. If there is a network device for handover, the terminal device performs handover to the network device for handover, to reduce interference to the surrounding network device, improve communication reliability, and balance load of the network device.

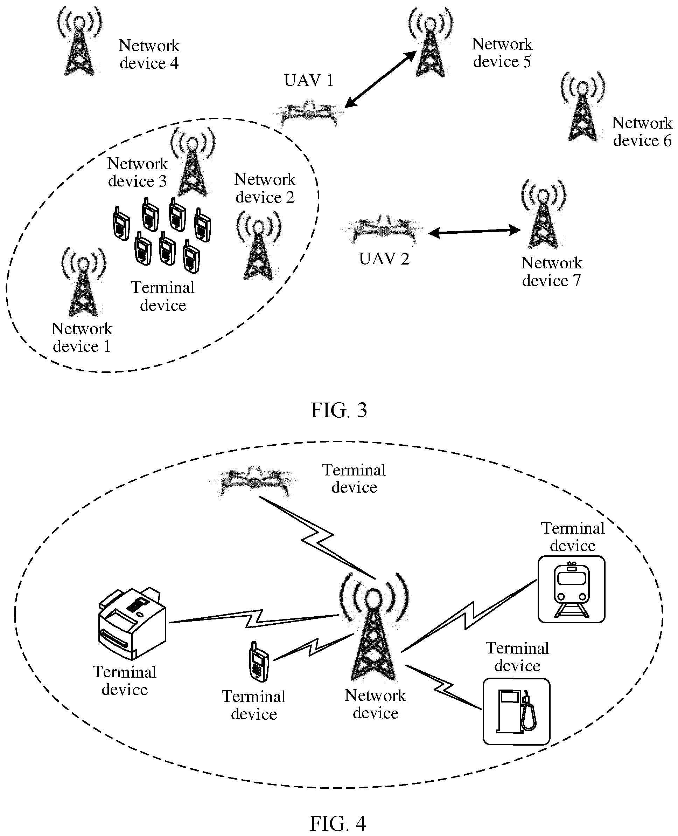

For example, as shown in FIG. 3, a service scenario covered by a network device 1, a network device 2, and a network device 3 is live broadcast in a stadium. The service scenario may include a large quantity of terminal devices. It may be considered that the network device 1, the network device 2, and the network device 3 need to meet uplink and downlink transmission with a large throughput, and current load is large. In this case, if a UAV 1 and a UAV 2 are used to perform real-time broadcast on a site, because coverage of the UAV is large, if the UAV 1 chooses to communicate with the nearest network device 3 (in other words, a serving network device of the UAV 1 is the network device 3), and the UAV 2 chooses to communicate with the nearest network device 2 (in other words, a serving network device of the UAV 2 is the network device 2), interference may be caused to network device transmission in the entire stadium. In addition, because load of the network device 1, the network device 2, and the network device 3 is large, high rate transmission requirements of the UAV 1 and the UAV 2 further increase burden of the network device 3 and the network device 2. Therefore, in the current service scenario, the UAVs may perform handover between network devices based on load, interference, and the like through configuration and interaction between the network devices. For example, the UAV 1 performs handover to a network device 5, and the UAV 2 performs handover to a network device 7.

However, if the serving network device determines, based on a measurement result of the terminal device and interaction between the network devices, that there is no network device for handover surrounding the terminal device, how the terminal device implements network device handover to reduce interference to the network device and improve communication reliability becomes an urgent technical problem to be resolved.

For example, as shown in FIG. 3, when the network device 3 determines, based on a measurement result of the UAV 1 and interaction between the network devices, that there is no network device for handover surrounding the UAV 1 (for example, coverage in which the UAV 1 supports high rate transmission is limited, or a network device 4, the network device 5, a network device 6, and the network device 7 are also in a high load condition and cannot meet a transmission requirement of the terminal device), the UAV 1 cannot implement network device handover, or the UAV 1 cannot implement access of a remote network device. Consequently, interference to a nearby network device cannot be reduced, and communication reliability is affected.

Based on the foregoing technical problem, it is proposed that the terminal device may further extend a communication range by supporting a capability of a beam (for example, an FR1 beam or an FR2 beam), to implement a capability of pointing a beam outside an event area in the scenario shown in FIG. 3, thereby reducing interference and improving communication reliability. However, the FR1 beam and network device handover in a corresponding communication scenario are not supported in a protocol, and a function of pointing the beam outside the event area cannot be implemented.

Therefore, when the serving network device determines, based on the measurement result of the terminal device, that there is no network device for handover surrounding the terminal device, how to implement network device handover to reduce interference to the network device and improve communication reliability becomes an urgent technical problem to be resolved.

To resolve this technical problem, embodiments of this application provide a communication method. The method may include: A terminal device receives a reference signal from one or more first network devices, and sends a first list to a second network device based on the reference signal; the terminal device receives a reference signal from one or more third network devices by using a first beam, and sends a second list to the second network device based on the reference signal; and the terminal device receives first indication information that is from the second network device and that indicates a target network device, and performs handover to the target network device based on the first indication information. The first list may indicate the one or more first network devices, the second list may indicate the one or more third network devices, and the one or more first network devices and the one or more third network devices include the target network device.

In embodiments of this application, the terminal device may determine a network device (namely, the one or more first network devices) near the terminal device in a non-beam manner, or may extend communication coverage in a beam manner, to determine a remote network device (namely, the one or more third network devices). A serving network device may determine the target network device for the terminal device from the one or more first network devices and the one or more third network devices based on the first list and the second list that are reported by the terminal device. This extends a range of network devices for handover, increases a success rate of implementing network device handover by the terminal device, and further balances load of the network device. When determining that there is no network device for handover near the terminal device, the serving network device may indicate the terminal device to perform handover to a remote network device, so that interference to a nearby network device can be reduced, communication reliability can be improved, and load of the network device can be balanced.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system; may be a fifth generation (fifth generation, 5G) mobile communication system, a new radio (new radio, NR) communication system, or a vehicle-to-everything (vehicle-to-everything, V2X) system; may be applied to an LTE and 5G hybrid networking system, a non-terrestrial communication network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system such as 6G; or may be a non-3GPP communication system. This is not limited.

The following uses FIG. 4 as an example to describe the communication system provided in embodiments of this application.

FIG. 4 is a diagram of a communication system according to an embodiment of this application. As shown in FIG. 4, the communication system may include a terminal device and a network device.

The terminal device in FIG. 4 may be located in cell coverage of the network device. The terminal device may perform air interface communication with the network device through an uplink (uplink, UL) or a downlink (downlink, DL). For example, the terminal device may send uplink data to the network device in an UL direction through a physical uplink shared channel (physical uplink shared channel, PUSCH); and the network device may send downlink data to the terminal device in a DL direction through a physical downlink shared channel (physical downlink shared channel, PDSCH).

The terminal device in FIG. 4 may alternatively be user equipment (user equipment, UE). The terminal device may be a device having a wireless transceiver function, or a chip or a chip system that can be disposed in the device, or may be referred to as a terminal (terminal), a mobile station (mobile station, MS), a mobile terminal (mobile terminal, MT), or the like. Specifically, the terminal device in FIG. 4 may be a mobile phone (mobile phone), a tablet computer, or a computer having a wireless transceiver function. The terminal device may alternatively be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a wireless terminal in a smart home (smart home), a vehicle-mounted terminal, an on board unit (on board unit, OBU), a roadside unit (roadside unit, RSU), a vehicle-mounted module, a vehicle, a vehicle having a vehicle-to-vehicle (vehicle-to-vehicle, V2V) communication capability, an intelligent connected vehicle, an unmanned aerial vehicle having an unmanned aerial vehicle to unmanned aerial vehicle (UAV to UAV, U2U) communication capability, a UAV, a UAV communication module, an embedded communication module, or the like. This is not limited.

The network device in FIG. 4 may be any device that is deployed in an access network and that can perform wireless communication with the terminal device, and is mainly configured to implement functions such as a radio physical control function, resource scheduling and radio resource management, radio access control, and mobility management. Specifically, the network device may be a device supporting wired access, or may be a device supporting wireless access.

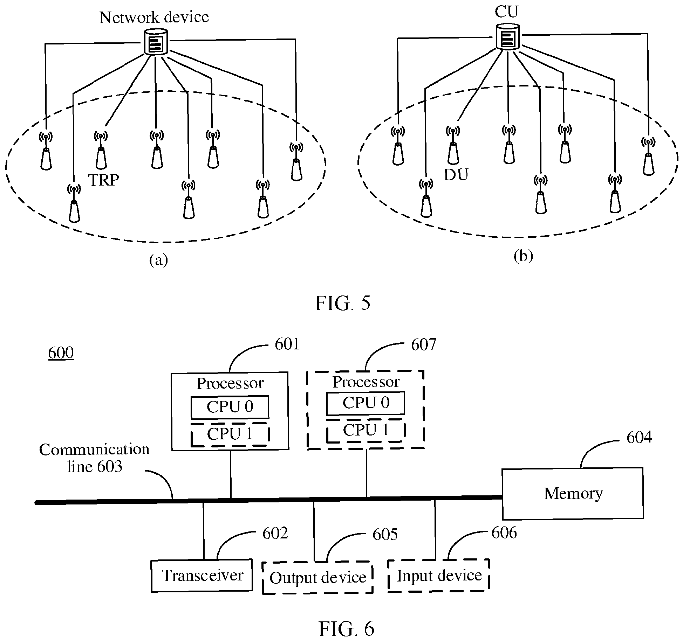

For example, the network device may be an access network (access network, AN) device/a radio access network (radio access network, RAN) device, and includes a plurality of AN/RAN nodes. The AN/RAN node may be a NodeB (NodeB, NB), an evolved NodeB (evolved NodeB, eNB), a macro base station, a micro base station, a relay station, an enhanced NodeB (enhanced NodeB, eNB), a next generation NodeB (NR NodeB, gNB), or the like; or may be a baseband unit (baseband unit, BBU) and a remote radio unit (remote radio unit, RRU). The AN/RAN node may alternatively be an access point (access point, AP), a transmission point (transmission point, TP), another access node, or the like. The AN/RAN node may alternatively be a transmission reception point (transmission reception point, TRP) shown in (a) in FIG. 5, where the TRP may be a radio frequency unit or an antenna device. The network device may alternatively be a central unit (central unit, CU)/distributed unit (distributed unit, DU) architecture shown in (b) in FIG. 5. In this case, the network device may include a CU and one or more DUs. The DU may implement a protocol stack function, for example, implement a physical layer function. The network device may alternatively be a control plane-user plane (control plane-user plane, CP-UP) architecture. In this case, the network device may include three network elements: a control plane of the CU (CU-CP), a user plane of the CU (CU-UP), and a DU. This is not limited.

For example, in a conventional universal mobile telecommunications system (universal mobile telecommunications system, UMTS) or an LTE communication system, the network device may be a macro base station eNB. In a heterogeneous network (heterogeneous network, HetNet) scenario, the network device may be a micro base station eNB. In a distributed base station scenario, the network device may be a BBU and an RRU. In a cloud radio access network (cloud radio access network, CRAN) scenario, the network device may be a baseband unit pool (BBU pool) and an RRU. In a future wireless communication system, the network device may be a gNB or the like. This is not limited.

It should be noted that the terminal device and the network device in this embodiment of this application each may be one or more chips, or may be a system on chip (system on chip, SoC), or the like. FIG. 4 is merely an example accompany drawing, and a quantity of devices included in FIG. 4 is not limited. In addition, in addition to the devices shown in FIG. 4, the communication system may further include another device. Names of the devices and the links in FIG. 4 are not limited. In addition to the names shown in FIG. 4, the devices and the links may have other names. In addition to the devices shown in FIG. 4, the communication system shown in FIG. 4 may further include a core network element, a data network, and the like. This is not limited.

During specific implementation, as shown in FIG. 4 or FIG. 5, for example, each terminal device or each network device may use a composition structure shown in FIG. 6, or include components shown in FIG. 6. FIG. 6 is a diagram of composition of a communication apparatus 600 according to an embodiment of this application. The communication apparatus 600 may be a terminal device, or a chip or a system on chip in the terminal device, or may be a network device, or a chip or a system on chip in the network device. As shown in FIG. 6, the communication apparatus 600 includes a processor 601, a transceiver 602, and a communication line 603.

Further, the communication apparatus 600 may further include a memory 604. The processor 601, the memory 604, and the transceiver 602 may be connected through the communication line 603.

The processor 601 is a central processing unit (central processing unit, CPU), a general-purpose processor network processor (network processor, NP), a digital signal processor (digital signal processor, DSP), a microprocessor, a microcontroller, a programmable logic device (programmable logic device, PLD), or any combination thereof. The processor 601 may alternatively be another apparatus having a processing function, for example, a circuit, a component, or a software module. This is not limited.

The transceiver 602 is configured to communicate with another device or another communication network. The another communication network may be an Ethernet, a radio access network (radio access network, RAN), a wireless local area network (wireless local area network, WLAN), or the like. The transceiver 602 may be a module, a circuit, a transceiver, or any apparatus that can implement communication.

The communication line 603 is configured to transmit information between components included in the communication apparatus 600.

The memory 604 is configured to store instructions. The instructions may be a computer program.

The memory 604 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disk storage (including a compact disc, a laser disc, an optical disc, a digital versatile disc, a Blu-ray disc, and the like), a disk storage medium or another magnetic storage device, or the like. This is not limited.

It should be noted that, the memory 604 may exist independently of the processor 601, or may be integrated with the processor 601. The memory 604 may be configured to store instructions, program code, some data, or the like. The memory 604 may be located in the communication apparatus 600, or may be located outside the communication apparatus 600. This is not limited. The processor 601 is configured to execute the instructions stored in the memory 604, to implement a communication method provided in the following embodiments of this application.

In an example, the processor 601 may include one or more CPUs, for example, a CPU 0 and a CPU 1 in FIG. 6.

In an optional implementation, the communication apparatus 600 includes a plurality of processors. For example, in addition to the processor 601 in FIG. 6, the communication apparatus 600 may further include a processor 607.

In an optional implementation, the communication apparatus 600 further includes an output device 605 and an input device 606. For example, the input device 606 is a device such as a keyboard, a mouse, a microphone, or a joystick, and the output device 605 is a device such as a display screen or a speaker (speaker).

It should be noted that, the communication apparatus 600 may be a desktop computer, a portable computer, a network server, a mobile phone, a tablet computer, a wireless terminal, an embedded device, a chip system, or a device having a similar structure in FIG. 6. In addition, the composition structure shown in FIG. 6 does not constitute a limitation on the communication apparatus. In addition to the components shown in FIG. 6, the communication apparatus may include more or fewer components than those shown in the figure, or combine some components, or have different component arrangements.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

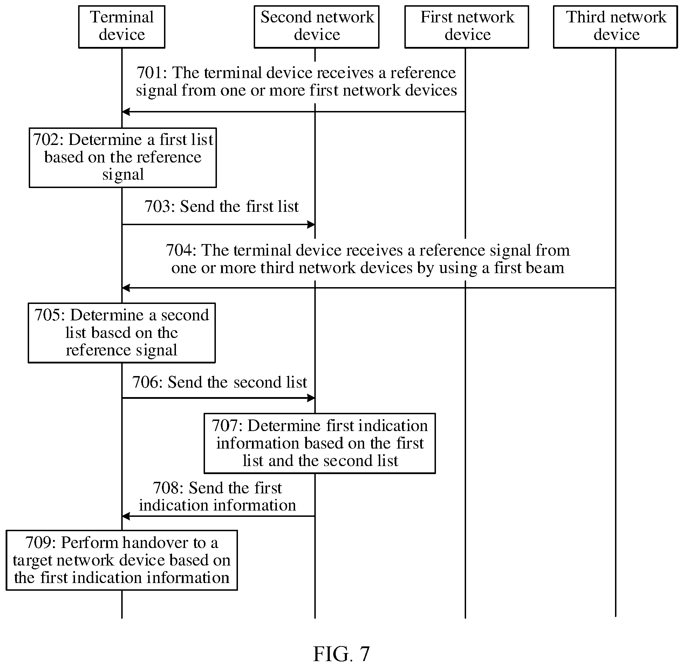

With reference to the communication system shown in FIG. 4 or FIG. 5, the communication method provided in embodiments of this application is described with reference to FIG. 7. A terminal device may be any terminal device in the communication system shown in FIG. 4, and a network device may be any network device in the communication system shown in FIG. 4 or FIG. 5. The terminal device and the network device described in the following embodiments may have the components shown in FIG. 6. Processing performed by a single execution body (the terminal device or the network device) shown in embodiments of this application may alternatively be performed by a plurality of execution bodies. These execution bodies may be logically and/or physically separated. This is not limited.

FIG. 7 is a flowchart of a communication method according to an embodiment of this application. As shown in FIG. 7, the method may include the following steps.

Step 701: A terminal device receives a reference signal from one or more first network devices.

After the terminal device enters a connected state, a serving network device of the terminal device may perform measurement-related configuration for the terminal device.

For example, the serving network device of the terminal device is a second network device. The second network device may indicate measurement control information to the terminal device. The measurement control information may include one or more of the following: a measurement object, a measurement identifier (identifier, ID), a trigger quantity, and measurement reporting configuration.

The measurement object may include a frequency of an SSB to be measured by the terminal device, a subcarrier spacing, a measurement reporting threshold, and SSB-based measurement timing configuration (SSB-based measurement timing configuration, SMTC). The SMTC is a window that is configured by the second network device for the terminal device and that is used for SSB measurement. The terminal device needs to perform SSB measurement within the SMTC window, and does not need to perform measurement outside the window. The SMTC may include an SMTC periodicity, an SMTC window size, and an offset. The SMTC periodicity may be 5/10/20/40/80/160 ms. The SMTC window size is SMTC duration (duration), which may be 1/2/3/4/5 ms. The offset is a time offset of the SMTC window relative to start time of a measurement periodicity.

The measurement ID may include a measurement object ID and measurement report ID association information.

The trigger quantity is a policy for triggering event reporting, and includes RSRP, reference signal received quality (reference signal received quality, RSRQ), a received signal strength indicator (received signal strength indicator, RSSI), and a signal to interference plus noise ratio (signal to interference plus noise ratio, SINR). The second network device may deliver measurement control of one or more indicators, for example, deliver one or more of the RSRP, the RSRQ, the RSSI, and the SINR.

For example, a measurement policy is determined based on RSRP of an SSB. When RSRP measured by the terminal device meets a determining condition, the terminal device reports a measurement result. The second network device may generate a candidate frequency or a cell list based on the RSRP, and then perform further filtering based on RSRQ or an SINR.

Optionally, a reference signal measured by the terminal device may further be a channel state information-reference signal (channel state information-reference signal, CSI-RS), and a measurement indicator may be one or more of RSRP, RSRQ, an RSSI, or an SINR.

The measurement reporting configuration may include information such as a measurement trigger type and a reporting format. The measurement reporting configuration may indicate the terminal device to perform periodic reporting or event reporting. If periodic reporting is performed, the second network device may indicate a specific reference signal class, a reporting time interval, a quantity of reporting times, a quantity of measured cells, and the like to the terminal device. If event reporting is performed, the second network device may indicate a reference signal class, a reporting time interval, a quantity of reporting times, a specific event, a related threshold value or offset value, a time to trigger (time to trigger, to be specific, duration in which an event entering condition is continuously met, or described as time lag) value, and the like to the terminal device.

Based on the foregoing descriptions of the measurement control information, after receiving the measurement control information indicated by the second network device, the terminal device may receive the reference signal based on the measurement control information.

The terminal device may receive a reference signal sent by one or more network devices near the terminal device, for example, receive the reference signal sent by the one or more first network devices. In other words, the first network device may be a network device near the terminal device, and the second network device may also be considered as the first network device.

Optionally, the terminal device receives, in a non-beam manner, the reference signal sent by the one or more first network devices.

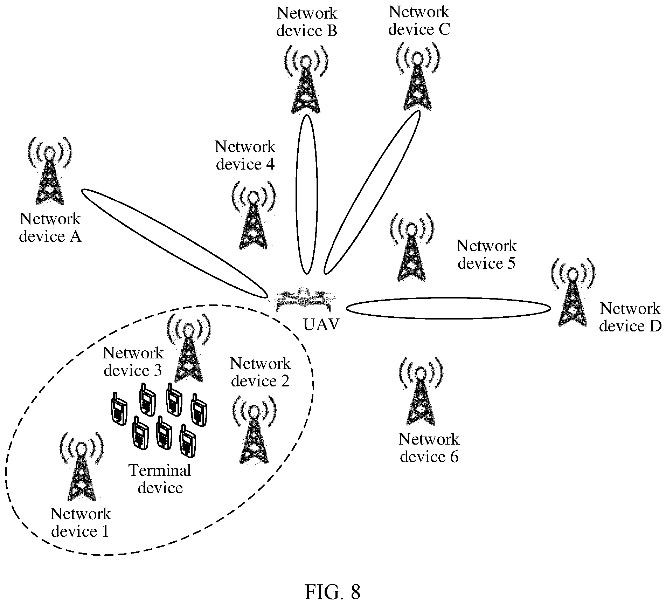

For example, as shown in FIG. 8, the terminal device is a UAV. The UAV may receive a reference signal sent by one or more nearby network devices, for example, receive a reference signal sent by one or more of a network device 1, a network device 2, a network device 3, a network device 4, a network device 5, and a network device 6. In other words, the first network device may be any one of the network device 1, the network device 2, the network device 3, the network device 4, the network device 5, and the network device 6.

The non-beam manner may be understood as that the terminal device receives, by using an omnidirectional antenna or a directional antenna, the reference signal sent by the network device.

For example, the omnidirectional antenna or the directional antenna may be one or more of the following antennas: a helical antenna, a patch antenna, an antenna array, and the like. This is not limited.

Corresponding to the non-beam manner, in the following step 704, the terminal device may receive, in a beam manner, a reference signal sent by one or more third network devices.

The beam manner may be understood as that the terminal device receives, by using a directional antenna, the reference signal sent by the network device.

Compared with the beam manner, the directional antenna in the non-beam manner may be a directional antenna with a wide beam, and the directional antenna in the beam manner may be a directional antenna with a narrow beam.

For example, the directional antenna with a narrow beam may be an antenna array supporting an analog beam, or the like. This is not limited.

In a possible design, the terminal device determines, based on preconfiguration or predefinition, to receive the reference signal from the one or more first network devices in the non-beam manner.

The preconfiguration is used as an example. The network device may indicate, in preconfiguration information, the terminal device to receive the reference signal in the non-beam manner; or indicate, in preconfiguration information, the terminal device to receive the reference signal in the beam manner. When the terminal device determines, based on the preconfiguration information, to receive the reference signal in the non-beam manner, the terminal device may perform step 701; or when the terminal device determines, based on the preconfiguration information, to receive the reference signal in the beam manner, the terminal device may perform the following step 704.

For example, the network device may use one bit in the preconfiguration information to indicate the terminal device to receive the reference signal in the non-beam manner or in the beam manner. For example, a value of the bit may be set to 0, to indicate the terminal device to receive the reference signal in the non-beam manner; or a value of the bit may be set to 1, to indicate the terminal device to receive the reference signal in the beam manner.

In another possible design, the terminal device determines to receive the reference signal from the one or more first network devices in the non-beam manner.

In still another possible design, the terminal device receives third indication information from the second network device, and determines, based on the third indication information, to receive the reference signal from the one or more first network devices in the non-beam manner. The third indication information may indicate the terminal device to receive the reference signal in the non-beam manner.

Alternatively, the network device may dynamically indicate, by using the third indication information, the terminal device to receive the reference signal in the non-beam manner.

The third indication information may be carried in signaling such as downlink control information (downlink control information, DCI) or radio resource control (radio resource control, RRC) signaling. This is not limited.

Step 702: The terminal device determines a first list based on the reference signal.

The first list may indicate the one or more first network devices.

Optionally, the first list includes identification information of the one or more first network devices.

Optionally, the first list is a local cells triggered list (cellsTriggeredList) of the terminal device.

Event reporting is used as an example. After receiving the measurement control information indicated by the second network device, the terminal device may receive, based on the measurement control information, the reference signal sent by the one or more first network devices, and evaluate the received reference signal, to determine whether the event entering condition is met. If a first network device meets the event entering condition and meets a time to trigger time requirement, the terminal device may store identification information of the first network device in the first list.

Optionally, when locally maintaining the first list, the terminal device sorts the first network devices in descending order of signal strength of the reference signals.

The terminal device may determine the signal strength of the received reference signal based on a parameter that can be used to represent the signal strength, for example, the RSRP, the RSRQ, the RSSI, or the SINR.

For example, as shown in FIG. 8, the terminal device is a UAV. The UAV may receive the reference signal sent by one or more of the nearby network device 1, network device 2, network device 3, network device 4, network device 5, and network device 6, and evaluate the received reference signal, to determine whether the event entering condition is met. Assuming that the network device 1, the network device 2, the network device 3, the network device 4, the network device 5, and the network device 6 meet the event entering condition and meet the time to trigger time requirement, the terminal device may store identification information of the network device 1, identification information of the network device 2, identification information of the network device 3, identification information of the network device 4, identification information of the network device 5, and identification information of the network device 6 in the first list.

Optionally, the terminal device may further trigger measurement reporting once when a first network device meets the event entering condition and meets the time to trigger time requirement. For example, the terminal device may report identification information of the first network device and signal strength of a reference signal of the first network device to the second network device.

Step 703: The terminal device sends the first list to the second network device.

Specifically, in a measurement reporting process, when the terminal device can detect reference signals of a plurality of first network devices, the second network device may further configure a maximum quantity of reported network devices (or described as a network device quantity threshold) for the terminal device. When a quantity of first network devices stored in the first list reaches the network device quantity threshold, measurement reporting may be triggered once again. In this case, the terminal device may report the first list stored by the terminal device.

Step 704: The terminal device receives the reference signal from the one or more third network devices by using a first beam.

Alternatively, the terminal device may receive the reference signal by using the first beam based on the measurement control information indicated by the second network device.

The terminal device may receive, by using the first beam, a reference signal sent by one or more remote network devices, for example, receive the reference signal sent by the one or more third network devices. In other words, the third network device may be a remote network device, and a distance between the third network device and the terminal device is greater than a distance between the first network device and the terminal device.

For example, as shown in FIG. 8, the terminal device is a UAV. The UAV may receive, by using the first beam, a reference signal sent by one or more remote network devices, for example, receive a reference signal sent by one or more of a network device A, a network device B, a network device C, and a network device D. In other words, the third network device may be any one of the network device A, the network device B, the network device C, and the network device D.

Optionally, the terminal device receives the reference signal from the one or more third network devices by using the first beam in a first frequency range.

The first frequency range may be an FR1, and the first beam may be an FR1 beam.

Optionally, the terminal device may adjust an antenna array or a directional antenna, to receive the reference signal of the remote network device by using the FR1 beam.

Compared with the non-beam manner in step 701, the antenna array or the directional antenna in the beam manner in step 704 may correspond to a narrow beam.

For example, the FR1 beam is used as the first beam in the beam manner. Compared with the non-beam manner, an angle corresponding to a main lobe width of the first beam may be relatively small, for example, 60° or 45°; and an antenna gain of the first beam may be relatively high, for example, 5 dBi or 10 dBi, so that the terminal device is supported in receiving the reference signal sent by the remote network device.

Optionally, the terminal device sends capability information to the second network device, where the capability information indicates whether the terminal device supports beam receiving and/or sending in the first frequency range.

When the terminal device supports beam receiving and/or sending in the first frequency range, the terminal device may receive the reference signal from the one or more third network devices by using the first beam.

The terminal device may determine, based on configuration information of the terminal device, whether the terminal device supports beam receiving and/or sending in the first frequency range.

Optionally, the terminal device may send the capability information to the second network device when sending the first list to the second network device, or may send the capability information to the second network device before the network device indicates measurement configuration information. This is not limited.

In a possible design, the terminal device determines, based on preconfiguration or predefinition, to receive the reference signal from the one or more third network devices in the beam manner. Alternatively, it is described as that the terminal device determines, based on preconfiguration or predefinition, to receive the reference signal from the one or more third network devices by using the first beam.

The preconfiguration is used as an example. The network device may indicate, in preconfiguration information, the terminal device to receive the reference signal in the non-beam manner; or indicate, in preconfiguration information, the terminal device to receive the reference signal in the beam manner. When the terminal device determines, based on the preconfiguration information, to receive the reference signal in the non-beam manner, the terminal device may perform step 701; or when the terminal device determines, based on the preconfiguration information, to receive the reference signal in the beam manner, the terminal device may perform step 704.

For example, the network device may use one bit in the preconfiguration information to indicate the terminal device to receive the reference signal in the non-beam manner or in the beam manner. For example, a value of the bit may be set to 0, to indicate the terminal device to receive the reference signal in the non-beam manner, or a value of the bit may be set to 1, to indicate the terminal device to receive the reference signal in the beam manner.

In another possible design, the terminal device determines to receive the reference signal from the one or more third network devices in the beam manner. Alternatively, it is described as that the terminal device determines to receive the reference signal from the one or more third network devices by using the first beam.

In still another possible design, the terminal device receives second indication information from the second network device, and determines, based on the second indication information, to receive the reference signal from the one or more third network devices by using the first beam. The second indication information may indicate the terminal device to receive the reference signal by using the first beam.

Alternatively, the network device may dynamically indicate, by using the second indication information, the terminal device to receive the reference signal by using the first beam.

The second indication information may be carried in signaling such as downlink control information (downlink control information, DCI) or radio resource control (radio resource control, RRC) signaling. This is not limited.

Optionally, because communication coverage can be extended in the beam manner, when receiving the reference signal by using the first beam, the terminal device may receive the reference signal sent by the remote network device, or may receive the reference signal sent by the nearby network device. In other words, when receiving the reference signal by using the first beam, the terminal device may receive the reference signal sent by the one or more third network devices, or may receive the reference signal sent by the one or more first network devices.

Step 705: The terminal device determines a second list based on the reference signal.

The second list may indicate the one or more third network devices.

Optionally, the second list includes identification information of the one or more third network devices.

Optionally, the second list is a local cells triggered list (cellsTriggeredList) of the terminal device.

Event reporting is used as an example. After receiving the measurement control information indicated by the second network device, the terminal device may receive, by using the first beam based on the measurement control information, the reference signal sent by the one or more third network devices, and evaluate the received reference signal, to determine whether the event entering condition is met. If a third network device meets the event entering condition and meets the time to trigger time requirement, the terminal device may store identification information of the third network device in the second list.

Optionally, when locally maintaining the second list, the terminal device sorts the third network devices in descending order of signal strength of the reference signals.

The terminal device may determine the signal strength of the received reference signal based on a parameter that can be used to represent the signal strength, for example, the RSRP, the RSRQ, the RSSI, or the SINR.

For example, as shown in FIG. 8, the terminal device is a UAV. The UAV may receive, by using the first beam, the reference signal sent by one or more of the remote network device A, network device B, network device C, and network device D, and evaluate the received reference signal, to determine whether the event entering condition is met. Assuming that the network device A, the network device B, the network device C, and the network device D meet the event entering condition and meet the time to trigger time requirement, the terminal device may store identification information of the network device A, identification information of the network device B, identification information of the network device C, and identification information of the network device D in the second list.

Optionally, the terminal device may further trigger measurement reporting once when a third network device meets the event entering condition and meets the time to trigger time requirement. For example, the terminal device may report identification information of the third network device and signal strength of a reference signal of the third network device to the second network device.

Optionally, because communication coverage can be extended in the beam manner, when receiving the reference signal by using the first beam, the terminal device may receive the reference signal sent by the one or more third network devices, or may receive the reference signal sent by the one or more first network devices. When maintaining the second list, the terminal device may store identification information of the third network device in the second list, or may store identification information of the first network device in the second list.

In other words, the second list may include only identification information of a remote network device that is newly measured after communication coverage is enhanced by using the first beam, or may include both identification information of a remote network device and identification information of a nearby network device.

For example, as shown in FIG. 8, the terminal device is a UAV. The UAV may receive, by using the first beam, the reference signal sent by one or more of the remote network device A, network device B, network device C, and network device D, and may further receive the reference signal sent by one or more of the nearby network device 1, network device 2, network device 3, network device 4, network device 5, and network device 6. The terminal device may evaluate the received reference signal, to determine whether the event entering condition is met. Assuming that the network device A to the network device D and the network device 1 to the network device 6 all meet the event entering condition and meet the time to trigger time requirement, the terminal device may store the identification information of the network device A to the network device D and the identification information of the network device 1 to the network device 6 in the second list.

Optionally, the terminal device may further trigger measurement reporting once when a first network device meets the event entering condition and meets the time to trigger time requirement. For example, the terminal device may report identification information of the first network device and signal strength of a reference signal of the first network device to the second network device.

Step 706: The terminal device sends the second list to the second network device.

Specifically, in a measurement reporting process, when the terminal device can detect reference signals of a plurality of third network devices, the second network device may further configure a maximum quantity of reported network devices (or described as a network device quantity threshold) for the terminal device. When a quantity of third network devices stored in the second list reaches the network device quantity threshold, measurement reporting may be triggered once again. In this case, the terminal device may report the second list stored by the terminal device.

Optionally, when the terminal device stores only the identification information of the third network device in the second list, if the quantity of third network devices stored in the second list reaches the network device quantity threshold, the terminal device may report the second list stored by the terminal device. When the terminal device stores both the identification information of the third network device and the identification information of the first network device in the second list, if a quantity of network devices stored in the second list reaches the network device quantity threshold, the terminal device may report the second list stored by the terminal device.

Optionally, the terminal device stores the measurement result, to be specific, the terminal device stores the identification information of the first network device in the first list and the identification information of the third network device in the second list.

It should be noted that, when storing the identification information of the first network device and the identification information of the third network device, the terminal device needs to distinguish between the first network device determined in the non-beam manner and the third network device determined by using the first beam. In this way, during subsequent network device handover, if a target network device indicated by the second network device is the first network device determined by the terminal device in the non-beam manner, the terminal device may perform handover to the target network device in the non-beam manner; or if a target network device indicated by the second network device is the third network device determined by the terminal device in the beam manner, the terminal device may perform handover to the target network device by using the first beam.

However, for the second network device, the second network device does not need to distinguish whether the network device obtained by the terminal device through measurement is obtained through measurement in the non-beam manner or obtained through measurement by using the first beam. To be specific, when indicating, to the second network device in a list manner, the network device obtained by the terminal device through measurement, the terminal device may not need to indicate, to the second network device, whether the network device obtained through measurement is obtained through measurement in the non-beam manner or obtained through measurement by using the first beam.

Step 707: The second network device determines first indication information based on the first list and the second list.

Step 708: The second network device sends the first indication information to the terminal device.

The first indication information may indicate the target network device, and the one or more first network devices and the one or more third network devices may include the target network device.

Specifically, the second network device may interact, based on the first list and the second list, with network devices indicated by the first list and the second list, to obtain running information of the one or more first network devices indicated by the first list and running information of the one or more third network devices indicated by the second list.

The running information may include information such as load of the network device, a quantity of users served by the network device, a network device density corresponding to the network device, or a location of the network device.

For example, the second network device may determine the target network device from the one or more first network devices and the one or more third network devices based on one or more of the following parameters: load of a network device, a quantity of users served by the network device, a network device density corresponding to the network device, or a location of the network device.

Load of the network device: If load of a network device in the first network device and the third network device that are included in the first list and the second list is less than or equal to a preset load value, the second network device may determine the network device as the target network device, that is, load of the target network device may be less than or equal to the preset load value. The second network device selects, from the first network device and the third network device, a network device with low load as the target network device, so that additional impact on the selected network device after the terminal device performs network device handover can be avoided.

Quantity of users served by the network device: If a quantity of users served by a network device in the first network device and the third network device that are included in the first list and the second list is less than or equal to a preset quantity, the second network device may determine the network device as the target network device, that is, a quantity of users served by the target network device is less than or equal to the preset quantity. The second network device selects, from the first network device and the third network device, a network device serving a small quantity of users as the target network device, so that additional impact on the selected network device after the terminal device performs network device handover can be avoided. The network device serving a small quantity of users may be considered as a network device with light load, and a network device serving a large quantity of users may be considered as a network device with heavy load.

Network device density corresponding to the network device: If a network device density corresponding to a network device in the first network device and the third network device that are included in the first list and the second list is less than or equal to a preset density, the second network device may determine the network device as the target network device, that is, a network device density corresponding to the target network device is less than or equal to the preset density. When the network device density is high, another network device surrounding the selected network device is more susceptible to interference from the terminal device. The second network device selects, from the first network device and the third network device, a network device with a low network device density as the target network device, so that the interference caused by the terminal device to the another network device surrounding the target network device can be reduced, and communication reliability can be improved.

Location of the network device: If a location of a network device in the first network device and the third network device that are included in the first list and the second list is not in a preset range, the second network device may determine the network device as the target network device, that is, a location of the target network device is outside the preset range. The preset range may be a network device dense area, a user dense area, or the like. This is not limited. The second network device selects, from the first network device and the third network device, a network device outside the preset range as the target network device, so that additional impact on the selected network device after the terminal device performs network device handover can be avoided, interference caused by the terminal device to another network device surrounding the target network device can be reduced, and communication reliability can be improved.

It should be noted that, when there is no target network device in the first list and the second list, the second network device may select, based on the first list and the second list from the first network device and the third network device that are indicated by the first list and the second list, a relatively available network device as the target network device, or give up performing network device handover.

The relatively available network device may be a network device with relatively low load, a network device serving a relatively small quantity of users, a network device with a relatively low network device density, a network device whose location is relatively near the edge of the preset range, or the like in the first network device and the third network device that are included in the first list and the second list. This is not limited.

Step 709: The terminal device performs handover to the target network device based on the first indication information.

The terminal device may implement network device handover based on the target network device indicated by the first indication information.

If the target network device indicated by the first indication information is the first network device determined by the terminal device in the non-beam manner, the terminal device may perform handover to the target network device in the non-beam manner; or if the target network device indicated by the first indication information is the third network device determined by the terminal device in the beam manner, the terminal device may perform handover to the target network device by using the first beam.

It should be noted that an execution sequence of step 701 to step 703 and step 704 to step 706 is not limited. The terminal device may first perform step 701 to step 703, and then perform step 704 to step 706. To be specific, the terminal device first receives the reference signal in the non-beam manner and reports the first list, and then changes to receiving the reference signal by using the first beam and reporting the second list. Alternatively, the terminal device may first perform step 704 to step 706, and then perform step 701 to step 703. To be specific, the terminal device first receives the reference signal by using the first beam and reports the second list, and then receives the reference signal in the non-beam manner and reports the first list.

Optionally, when reporting the first list and the second list to the second network device, the terminal device may separately report the first list and the second list, or may report the first list and the second list at the same time. This is not limited.

Based on the method shown in FIG. 7, the terminal device may determine a network device (namely, the one or more first network devices) near the terminal device in the non-beam manner, or may extend communication coverage in the beam manner, to determine a remote network device (namely, the one or more third network devices). A serving network device may determine the target network device for the terminal device from the one or more first network devices and the one or more third network devices based on the first list and the second list that are reported by the terminal device. This extends a range of network devices for handover, increases a success rate of implementing network device handover by the terminal device, and further balances load of the network device.

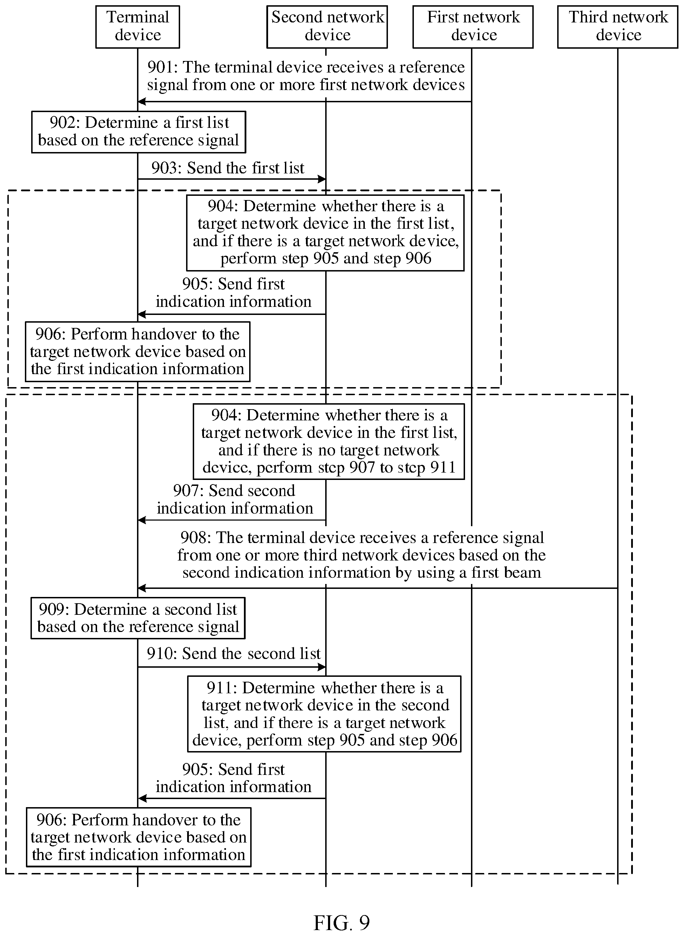

Different from that the second network device determines the target network device based on the first list and the second list in FIG. 7, as shown in FIG. 9, when receiving a first list, a second network device may determine, based on the first list, whether there is a target network device, and if there is no target network device, the second network device indicates a terminal device to receive a reference signal by using a first beam, and then determines, based on a second list sent by the terminal device, whether there is a target network device.

FIG. 9 shows a communication method according to an embodiment of this application. The method may include the following steps.

Step 901: A terminal device receives a reference signal from one or more first network devices.

For descriptions of step 901, refer to the foregoing descriptions of step 701. Details are not described again.

Step 902: The terminal device determines a first list based on the reference signal.

The first list may indicate the one or more first network devices.

For descriptions of step 902, refer to the foregoing descriptions of step 702. Details are not described again.

Step 903: The terminal device sends the first list to a second network device.

For descriptions of step 903, refer to the foregoing descriptions of step 703. Details are not described again.

Step 904: The second network device determines whether there is a target network device in the first list, and if there is a target network device, performs the following step 905 and step 906; or if there is no target network device, performs the following step 907 to step 911.

The first list may indicate the one or more first network devices.

Specifically, the second network device may determine, with reference to the related descriptions that the second network device determines the target network device from the one or more first network devices and the one or more third network devices in step 707, whether there is a target network device in the one or more first network devices indicated by the first list. Details are not described herein again.

Step 905: The second network device sends first indication information to the terminal device.

The first indication information may indicate the target network device.

For descriptions of step 905, refer to the foregoing descriptions of step 708. Details are not described again.

Step 906: The terminal device performs handover to the target network device based on the first indication information.

For descriptions of step 906, refer to the foregoing descriptions of step 709. Details are not described again.

Step 907: The second network device sends second indication information to the terminal device.

The second indication information may indicate the terminal device to receive the reference signal by using a first beam.

Specifically, when the second network device determines, based on the first list, that there is no network device for handover near the terminal device (in other words, there is no target network device in the one or more first network devices indicated by the first list), the second network device may send the second indication information to the terminal device, to indicate the terminal device to extend communication coverage in a beam manner, and search for and measure a remote network device. This extends a range of network devices for handover, increases a success rate of implementing network device handover by the terminal device, and balances load of the network device.

Optionally, the second network device sends the second indication information to the terminal device based on capability information of the terminal device.

The capability information may indicate whether the terminal device supports beam receiving and/or sending in a first frequency range.

For descriptions of the capability information, refer to the foregoing descriptions of the capability information in step 704. Details are not described again.

When the terminal device supports beam receiving and/or sending in the first frequency range, the second network device may send the second indication information to the terminal device.

Step 908: The terminal device receives a reference signal from one or more third network devices based on the second indication information by using the first beam.

For descriptions of step 908, refer to the foregoing descriptions of step 704. Details are not described again.

Step 909: The terminal device determines a second list based on the reference signal.

The second list may indicate the one or more third network devices.

Alternatively, the second list may indicate the one or more third network devices and the one or more first network devices.

For descriptions of step 909, refer to the foregoing descriptions of step 705. Details are not described again.

Step 910: The terminal device sends the second list to the second network device.

For descriptions of step 910, refer to the foregoing descriptions of step 706. Details are not described again.

Step 911: The second network device determines whether there is a target network device in the second list, and if there is a target network device, performs step 905 and step 906.

The second list may indicate the one or more third network devices.

Specifically, the second network device may determine, with reference to the related descriptions that the second network device determines the target network device from the one or more first network devices and the one or more third network devices in step 707, whether there is a target network device in the one or more third network devices indicated by the second list. Details are not described herein again.

When determining that there is a target network device in the one or more third network devices indicated by the second list, the second network device may indicate the terminal device to perform handover to the target network device, to reduce interference of the terminal device to a network device near the terminal device, improve communication reliability, and balance load of the network device.

Alternatively, the second list may indicate the one or more third network devices and the one or more first network devices.

Specifically, the second network device may determine, with reference to the related descriptions that the second network device determines the target network device from the one or more first network devices and the one or more third network devices in step 707, whether there is a target network device in the one or more third network devices and the one or more first network devices that are indicated by the second list. Details are not described herein again.

When the second network device determines that there is a target network device in the one or more third network devices and the one or more first network devices that are indicated by the second list, the second network device may indicate the terminal device to perform handover to the target network device, to reduce interference of the terminal device to a network device near the terminal device, improve communication reliability, and balance load of the network device.

It should be noted that, when there is no target network device in the one or more first network devices and the one or more third network devices that are indicated by the first list and the second list, the second network device may select, based on the first list and the second list from the one or more first network devices and the one or more third network devices that are indicated by the first list and the second list, a relatively available network device as the target network device, or give up performing network device handover.

The relatively available network device may be a network device with relatively low load, a network device serving a relatively small quantity of users, a network device with a relatively low network device density, a network device whose location is relatively near the edge of a preset range, or the like in the one or more first network devices and the one or more third network devices that are indicated by the first list and the second list. This is not limited.

Based on the method shown in FIG. 9, when determining that there is no network device for handover near the terminal device, a serving network device (namely, the second network device) may indicate the terminal device to discover a remote network device by using the first beam, to perform handover to the remote network device, so that interference to a nearby network device can be reduced, communication reliability can be improved, and load of the network device can be balanced.

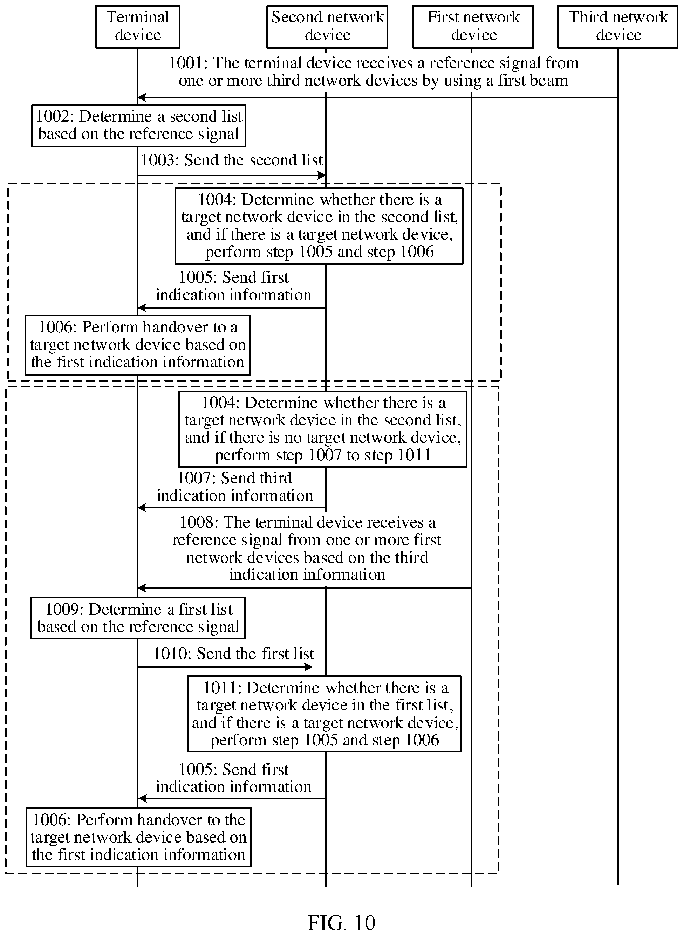

Different from that the second network device first determines, based on the first list, whether there is a target network device, and if there is no target network device, the second network device indicates the terminal device to receive the reference signal by using the first beam, and then determines, based on the second list sent by the terminal device, whether there is a target network device in FIG. 9, as shown in FIG. 10, a terminal device may first receive a reference signal by using a first beam, and report a second list to a second network device, and the second network device determines whether there is a target network device in the second list, and if there is no target network device, the second network device indicates the terminal device to receive the reference signal in a non-beam manner and report a first list, and then determines, based on the first list, whether there is a target network device.

FIG. 10 shows a communication method according to an embodiment of this application. The method may include the following steps.

Step 1001: A terminal device receives a reference signal from one or more third network devices by using a first beam.

For descriptions of step 1001, refer to the foregoing descriptions of step 704. Details are not described again.

Step 1002: The terminal device determines a second list based on the reference signal.

The second list may indicate the one or more third network devices.

Alternatively, the second list may indicate the one or more third network devices and one or more first network devices.

For descriptions of step 1002, refer to the foregoing descriptions of step 705. Details are not described again.

Step 1003: The terminal device sends the second list to a second network device.

For descriptions of step 1003, refer to the foregoing descriptions of step 706. Details are not described again.

Step 1004: The second network device determines whether there is a target network device in the second list, and if there is a target network device, performs step 1005 and step 1006; or if there is no target network device, performs step 1007 to step 1011.

The second list may indicate the one or more third network devices.

Specifically, the second network device may determine, with reference to the related descriptions that the second network device determines the target network device from the one or more first network devices and the one or more third network devices in step 707, whether there is a target network device in the one or more third network devices indicated by the second list. Details are not described herein again.

Alternatively, the second list may indicate the one or more third network devices and the one or more first network devices.

Specifically, the second network device may determine, with reference to the related descriptions that the second network device determines the target network device from the one or more first network devices and the one or more third network devices in step 707, whether there is a target network device in the one or more third network devices and the one or more first network devices that are indicated by the second list. Details are not described herein again.

When the second network device determines, based on the second list, that there is a target network device, the second network device may indicate the terminal device to perform handover to the target network device, to reduce interference to a nearby network device, improve communication reliability, and balance load of the network device.

Step 1005: The second network device sends first indication information to the terminal device.

The first indication information may indicate the target network device.

For descriptions of step 1005, refer to the foregoing descriptions of step 708. Details are not described again.

Step 1006: The terminal device performs handover to the target network device based on the first indication information.

For descriptions of step 1006, refer to the foregoing descriptions of step 709. Details are not described again.

Step 1007: The second network device sends third indication information to the terminal device.

The third indication information may indicate the terminal device to receive the reference signal in a non-beam manner.

Specifically, in a process in which the terminal device first receives the reference signal by using the first beam, the terminal device may be unable to connect to all network devices (for example, the network device 1 to the network device 6 and the network device A to the network device D shown in FIG. 8) due to a reason such as blocking. Therefore, receiving the reference signal in the non-beam manner may be introduced to supplement measurement. This extends a range of network devices for handover, increases a success rate of implementing network device handover by the terminal device, and balances load of the network device.

Step 1008: The terminal device receives a reference signal from the one or more first network devices based on the third indication information.

For descriptions of step 1008, refer to the foregoing descriptions of step 701. Details are not described again.

Step 1009: The terminal device determines a first list based on the reference signal.

The first list may indicate the one or more first network devices.

For descriptions of step 1009, refer to the foregoing descriptions of step 702. Details are not described again.

Step 1010: The terminal device sends the first list to the second network device.

For descriptions of step 1010, refer to the foregoing descriptions of step 703. Details are not described again.

Step 1011: The second network device determines whether there is a target network device in the first list, and if there is a target network device, performs step 1005 and step 1006.

The first list may indicate the one or more first network devices.

Specifically, the second network device may determine, with reference to the related descriptions that the second network device determines the target network device from the one or more first network devices and the one or more third network devices in step 707, whether there is a target network device in the one or more first network devices indicated by the first list. Details are not described herein again.

When there is a target network device, the terminal device may perform handover to the target network device, to reduce interference to a nearby network device, improve communication reliability, and balance load of the network device.

It should be noted that, when there is no target network device in the first list and the second list, the second network device may select, based on the first list and the second list from the one or more first network devices and the one or more third network devices that are indicated by the first list and the second list, a relatively available network device as the target network device, or give up performing network device handover.

The relatively available network device may be a network device with relatively low load, a network device serving a relatively small quantity of users, a network device with a relatively low network device density, a network device whose location is relatively near the edge of a preset range, or the like. This is not limited.

Based on the method shown in FIG. 10, the terminal device may discover a remote network device by using the first beam, and perform handover to the remote network device, so that interference to a nearby network device can be reduced, communication reliability can be improved, and load of the network device can be balanced. When in a process in which the terminal device receives the reference signal by using the first beam, the terminal device is unable to connect to all network devices due to a reason such as blocking, receiving the reference signal in the non-beam manner may be introduced to supplement measurement. This extends a range of network devices for handover, increases a success rate of implementing network device handover by the terminal device, and balances load of the network device.

Different from that the second network device determines, based on the first list and the second list that are sent by the terminal device, whether there is a target network device in FIG. 7 to FIG. 10, the second network device may alternatively determine, based on measurement reporting triggered by the terminal device each time, whether a network device corresponding to currently triggered measurement reporting is the target network device. If the network device corresponding to the currently triggered measurement reporting is the target network device, the second network device may indicate the terminal device to perform handover to the target network device.

In the methods shown in FIG. 7 to FIG. 10, an example in which the first beam is an FR1 beam is used to describe how the terminal device determines the remote network device in a beam manner. Optionally, the terminal device may alternatively determine the remote network device by using an FR2 beam, that is, the first beam may alternatively be an FR2 beam. This extends a range of network devices for handover, increases a success rate of implementing network device handover by the terminal device, and balances load of the network device.

Compared with the FR1 beam in step 704, the FR2 beam may be a narrower beam.

For example, compared with the FR1 beam, an angle corresponding to a main lobe width of the FR2 beam may be smaller, and an antenna gain of the FR2 beam may be higher, so that the terminal device is supported in receiving a reference signal sent by the remote network device.

For descriptions that the terminal device determines the remote network device by using the FR2 beam, refer to the related descriptions that the terminal device determines the remote network device by using the FR1 beam in FIG. 7 to FIG. 10. Details are not described again.

When the first beam is the FR2 beam, capability information of the terminal device may indicate whether the terminal device supports beam receiving and/or sending in a second frequency range. The second frequency range may be an FR2.

Alternatively, the terminal device determines the remote network device in a manner of combining the FR1 beam and the FR2 beam, that is, the first beam includes the FR1 beam and the FR2 beam. This extends a range of network devices for handover, increases a success rate of implementing network device handover by the terminal device, and balances load of the network device.

For descriptions that the terminal device determines the remote network device by using the FR1 beam and the FR2 beam, refer to the related descriptions that the terminal device determines the remote network device by using the FR1 beam in FIG. 7 to FIG. 10. Details are not described again.

When the first beam includes the FR1 beam and the FR2 beam, the capability information of the terminal device may indicate whether the terminal device supports beam receiving and/or sending in a first frequency range and the second frequency range. The first frequency range may be an FR1, and the second frequency range may be the FR2.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of each device may be obtained through division based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

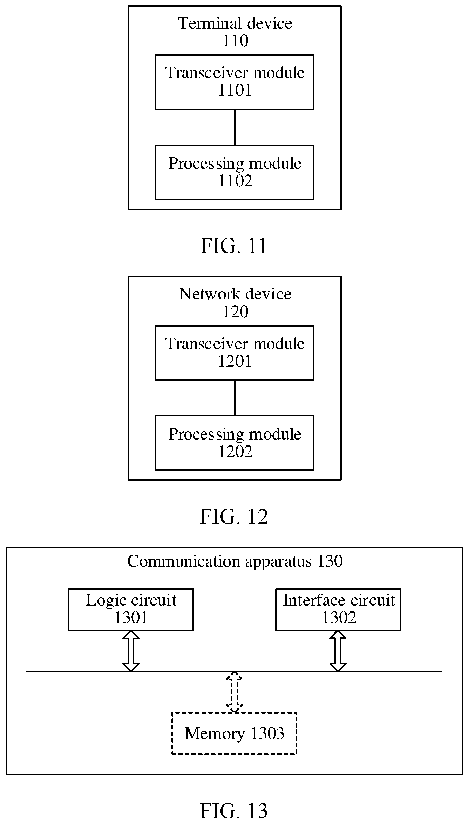

When each functional module is obtained through division based on each corresponding function, FIG. 11 shows a terminal device 110. The terminal device 110 may perform actions performed by the terminal device in FIG. 7 to FIG. 10.

The terminal device 110 may include a transceiver module 1101 and a processing module 1102. For example, the terminal device 110 may be a terminal device, or may be a chip used in the terminal device or another combined component, part, or the like that has a function of the foregoing terminal device. When the terminal device 110 is the terminal device, the transceiver module 1101 may be a transceiver, where the transceiver may include an antenna, a radio frequency circuit, and the like; and the processing module 1102 may be a processor (or a processing circuit), for example, a baseband processor, where the baseband processor may include one or more CPUs. When the terminal device 110 is the part that has the function of the foregoing terminal device, the transceiver module 1101 may be a radio frequency unit; and the processing module 1102 may be a processor (or a processing circuit), for example, a baseband processor. When the terminal device 110 is a chip system, the transceiver module 1101 may be an input/output interface of a chip (for example, a baseband chip); and the processing module 1102 may be a processor (or a processing circuit) of the chip system, and may include one or more central processing units. It should be understood that the transceiver module 1101 in this embodiment of this application may be implemented by a transceiver or a transceiver-related circuit component, and the processing module 1102 may be implemented by a processor or a processor-related circuit component (or referred to as a processing circuit).

For example, the transceiver module 1101 may be configured to perform all sending and receiving operations performed by the terminal device in the embodiments shown in FIG. 7 and FIG. 10, and/or configured to support another process of the technology described in this specification. The processing module 1102 may be configured to perform all operations other than sending and receiving operations performed by the terminal device in the embodiments shown in FIG. 7 and FIG. 10, and/or configured to support another process of the technology described in this specification.

In another possible implementation, the transceiver module 1101 in FIG. 11 may be replaced with a transceiver, and a function of the transceiver module 1101 may be integrated into the transceiver. The processing module 1102 may be replaced with a processor, and a function of the processing module 1102 may be integrated into the processor. Further, the terminal device 110 shown in FIG. 11 may further include a memory.

Alternatively, when the processing module 1102 is replaced with a processor, and the transceiver module 1101 is replaced with a transceiver, the terminal device 110 in this embodiment of this application may be a communication apparatus 130 shown in FIG. 13. The processor may be a logic circuit 1301, and the transceiver may be an interface circuit 1302. Further, the communication apparatus 130 shown in FIG. 13 may further include a memory 1303.

When each functional module is obtained through division based on each corresponding function, FIG. 12 shows a network device 120. The network device 120 may perform actions performed by the network device in FIG. 7 to FIG. 10.

The network device 120 may include a transceiver module 1201 and a processing module 1202. For example, the network device 120 may be a network device, or may be a chip used in the network device or another combined component, part, or the like that has a function of the foregoing network device. When the network device 120 is the network device, the transceiver module 1201 may be a transceiver, where the transceiver may include an antenna, a radio frequency circuit, and the like; and the processing module 1202 may be a processor (or a processing circuit), for example, a baseband processor, where the baseband processor may include one or more CPUs. When the network device 120 is the part that has the function of the foregoing network device, the transceiver module 1201 may be a radio frequency unit; and the processing module 1202 may be a processor (or a processing circuit), for example, a baseband processor. When the network device 120 is a chip system, the transceiver module 1201 may be an input/output interface of a chip (for example, a baseband chip); and the processing module 1202 may be a processor (or a processing circuit) of the chip system, and may include one or more central processing units. It should be understood that the transceiver module 1201 in this embodiment of this application may be implemented by a transceiver or a transceiver-related circuit component, and the processing module 1202 may be implemented by a processor or a processor-related circuit component (or referred to as a processing circuit).

For example, the transceiver module 1201 may be configured to perform all sending and receiving operations performed by the network device in the embodiments shown in FIG. 7 and FIG. 10, and/or configured to support another process of the technology described in this specification. The processing module 1202 may be configured to perform all operations other than sending and receiving operations performed by the network device in the embodiments shown in FIG. 7 and FIG. 10, and/or configured to support another process of the technology described in this specification.

In another possible implementation, the transceiver module 1201 in FIG. 12 may be replaced with a transceiver, and a function of the transceiver module 1201 may be integrated into the transceiver. The processing module 1202 may be replaced with a processor, and a function of the processing module 1202 may be integrated into the processor. Further, the network device 120 shown in FIG. 12 may further include a memory.

Alternatively, when the processing module 1202 is replaced with a processor, and the transceiver module 1201 is replaced with a transceiver, the network device 120 in this embodiment of this application may be a communication apparatus 130 shown in FIG. 13. The processor may be a logic circuit 1301, and the transceiver may be an interface circuit 1302. Further, the communication apparatus 130 shown in FIG. 13 may further include a memory 1303.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of the procedures in the foregoing method embodiments may be implemented by a computer program instructing related hardware. The program may be stored in the foregoing computer-readable storage medium. When the program is executed, the procedures of the foregoing method embodiments may be included. The computer-readable storage medium may be an internal storage unit in the terminal (including a data transmit end and/or a data receive end) in any one of the foregoing embodiments, for example, a hard disk drive or an internal memory of the terminal. The computer-readable storage medium may alternatively be an external storage device of the foregoing terminal, for example, a plug-in hard disk drive, a smart media card (smart media card, SMC), a secure digital (secure digital, SD) card, and a flash card (flash card) that are configured on the foregoing terminal. Further, the computer-readable storage medium may further include both the internal storage unit and the external storage device of the foregoing terminal. The computer-readable storage medium is configured to store the computer program and other programs and data that are required by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Based on the foregoing descriptions of the implementations, a person skilled in the art may clearly understand that for the purpose of convenient and brief descriptions, division into the foregoing function modules is merely used as an example for description. During actual application, the foregoing functions can be allocated to different function modules for implementation based on a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division, and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

**Claims**

1. A communication method, comprising:

    receiving, by a terminal device, a reference signal from one or more first network devices;
    sending, by the terminal device, a first list to a second network device based on the reference signal, wherein the first list indicates the one or more first network devices;
    receiving, by the terminal device, a reference signal from one or more third network devices by using a first beam;
    sending, by the terminal device, a second list to the second network device based on the reference signal, wherein the second list indicates the one or more third network devices;
    receiving, by the terminal device, first indication information from the second network device, wherein the first indication information indicates a target network device, and the one or more first network devices and the one or more third network devices comprise the target network device; and
    performing, by the terminal device, handover to the target network device based on the first indication information.

2. The method according to claim 1, wherein
   the second list further indicates the one or more first network devices.

3. The method according to claim 1 or 2, wherein the receiving, by the terminal device, a reference signal from one or more third network devices by using a first beam comprises:

    determining, by the terminal device based on preconfiguration or predefinition, to receive the reference signal from the one or more third network devices by using the first beam; or
    receiving, by the terminal device, second indication information from the second network device, and receiving the reference signal from the one or more third network devices based on the second indication information by using the first beam, wherein the second indication information indicates the terminal device to receive the reference signal by using the first beam.

4. The method according to any one of claims 1 to 3, wherein the receiving, by the terminal device, a reference signal from one or more third network devices by using a first beam comprises:
   receiving, by the terminal device, the reference signal from the one or more third network devices by using the first beam in a first frequency range.

5. The method according to any one of claims 1 to 4, wherein the method further comprises:
   sending, by the terminal device, capability information to the second network device, wherein the capability information indicates whether the terminal device supports beam receiving and/or sending in the first frequency range.

6. The method according to any one of claims 1 to 5, wherein

    load of the target network device is less than or equal to a preset load value;

a quantity of users served by the target network device is less than or equal to a preset quantity;
a network device density corresponding to the target network device is less than or equal to a preset density; or
a location of the target network device is outside a preset range.

7. A communication method, comprising:

receiving, by a second network device, a first list from a terminal device, wherein the first list indicates one or more first network devices;
receiving, by the second network device, a second list from the terminal device, wherein the second list indicates one or more third network devices, and the one or more third network devices are determined by the terminal device by using a first beam;
determining, by the second network device, first indication information based on the first list and the second list, wherein the first indication information indicates a target network device, and the one or more first network devices and the one or more third network devices comprise the target network device; and
sending, by the second network device, the first indication information to the terminal device.

8. The method according to claim 7, wherein before the receiving, by the second network device, a second list from the terminal device, the method further comprises:
sending, by the second network device, second indication information to the terminal device, wherein the second indication information indicates the terminal device to receive a reference signal by using the first beam.

9. The method according to claim 8, wherein the sending, by the second network device, second indication information to the terminal device comprises:

receiving, by the second network device, capability information from the terminal device, wherein the capability information indicates whether the terminal device supports beam receiving and/or sending in a first frequency range; and
when the terminal device supports beam receiving and/or sending in the first frequency range, sending, by the second network device, the second indication information to the terminal device.

10. The method according to any one of claims 7 to 9, wherein
the second list further indicates the one or more first network devices.

11. The method according to any one of claims 7 to 10, wherein the method further comprises:
determining, by the second network device, the target network device from the one or more first network devices and the one or more third network devices based on one or more of the following parameters: load of a network device, a quantity of users served by the network device, a network device density corresponding to the network device, or a location of the network device.

12. The method according to any one of claims 7 to 11, wherein

load of the target network device is less than or equal to a preset load value;
a quantity of users served by the target network device is less than or equal to a preset quantity;
a network device density corresponding to the target network device is less than or equal to a preset density; or
a location of the target network device is outside a preset range.

13. A communication apparatus, comprising:

a transceiver module, configured to receive a reference signal from one or more first network devices, wherein
the transceiver module is further configured to send a first list to a second network device based on the reference signal, wherein the first list indicates the one or more first network devices;
the transceiver module is further configured to receive a reference signal from one or more third network devices by using a first beam;
the transceiver module is further configured to send a second list to the second network device based on the reference signal, wherein the second list indicates the one or more third network devices; and
the transceiver module is further configured to receive first indication information from the second network device, wherein the first indication information indicates a target network device, and the one or more first network devices and the one or more third network devices comprise the target network device; and

a processing module, configured to perform handover to the target network device based on the first indication information.

**14.** The apparatus according to claim 13, wherein
the second list further indicates the one or more first network devices.

**15.** The apparatus according to claim 13 or 14, wherein the transceiver module is specifically configured to:

determine, based on preconfiguration or predefinition, to receive the reference signal from the one or more third network devices by using the first beam; or
receive second indication information from the second network device, and receive the reference signal from the one or more third network devices based on the second indication information by using the first beam, wherein the second indication information indicates the terminal device to receive the reference signal by using the first beam.

**16.** The apparatus according to any one of claims 13 to 15, wherein the transceiver module is specifically configured to:
receive the reference signal from the one or more third network devices by using the first beam in a first frequency range.

**17.** The apparatus according to any one of claims 13 to 16, wherein
the transceiver module is further configured to send capability information to the second network device, wherein the capability information indicates whether the terminal device supports beam receiving and/or sending in the first frequency range.

**18.** The apparatus according to any one of claims 13 to 17, wherein

load of the target network device is less than or equal to a preset load value;
a quantity of users served by the target network device is less than or equal to a preset quantity;
a network device density corresponding to the target network device is less than or equal to a preset density; or
a location of the target network device is outside a preset range.

**19.** A communication apparatus, comprising:

a transceiver module, configured to receive a first list from a terminal device, wherein the first list indicates one or more first network devices, wherein
the transceiver module is further configured to receive a second list from the terminal device, wherein the second list indicates one or more third network devices, and the one or more third network devices are determined by the terminal device by using a first beam; and
a processing module, configured to determine first indication information based on the first list and the second list, wherein the first indication information indicates a target network device, and the one or more first network devices and the one or more third network devices comprise the target network device, wherein
the transceiver module is further configured to send the first indication information to the terminal device.

**20.** The apparatus according to claim 19, wherein before receiving the second list from the terminal device, the transceiver module is further configured to:
send second indication information to the terminal device, wherein the second indication information indicates the terminal device to receive a reference signal by using the first beam.

**21.** The apparatus according to claim 20, wherein that the transceiver module sends the second indication information to the terminal device comprises:

the transceiver module is configured to receive capability information from the terminal device, wherein the capability information indicates whether the terminal device supports beam receiving and/or sending in a first frequency range; and
when the terminal device supports beam receiving and/or sending in the first frequency range, the transceiver module sends the second indication information to the terminal device.

**22.** The apparatus according to any one of claims 19 to 21, wherein
the second list further indicates the one or more first network devices.

23. The apparatus according to any one of claims 19 to 22, wherein the processing module is specifically configured to: determine the target network device from the one or more first network devices and the one or more third network devices based on one or more of the following parameters: load of a network device, a quantity of users served by the network device, a network device density corresponding to the network device, or a location of the network device.

24. The apparatus according to any one of claims 19 to 23, wherein

load of the target network device is less than or equal to a preset load value;
a quantity of users served by the target network device is less than or equal to a preset quantity;
a network device density corresponding to the target network device is less than or equal to a preset density; or
a location of the target network device is outside a preset range.

25. A communication apparatus, wherein the communication apparatus comprises a processor, and the processor is configured to run a computer program or instructions, to enable the communication apparatus to perform the communication method according to any one of claims 1 to 6 or the communication method according to any one of claims 7 to 12.

26. A computer-readable storage medium, wherein the computer-readable storage medium stores computer instructions or a program, and when the computer instructions or the program is run on a computer, the communication method according to any one of claims 1 to 6 or the communication method according to any one of claims 7 to 12 is performed.

27. A computer program product, wherein the computer program product comprises computer instructions; and when some or all of the computer instructions are run on a computer, the communication method according to any one of claims 1 to 6 or the communication method according to any one of claims 7 to 12 is performed.

FIG. 1

FIG. 2

FIG. 3

FIG. 4

FIG. 5

FIG. 6

```
┌──────────┐    ┌──────────────┐   ┌──────────────┐   ┌──────────────┐
│ Terminal │    │Second network│   │ First network│   │ Third network│
│  device  │    │    device    │   │    device    │   │    device    │
└────┬─────┘    └──────┬───────┘   └──────┬───────┘   └──────┬───────┘
```

701: The terminal device receives a reference
signal from one or more first network devices

702: Determine a first list
based on the reference
signal

703: Send the first list

704: The terminal device receives a reference signal from
one or more third network devices by using a first beam

705: Determine a second
list based on the
reference signal

706: Send the second list

707: Determine first indication
information based on the first
list and the second list

708: Send the first
indication information

709: Perform handover to a
target network device based on
the first indication information

FIG. 7

32

FIG. 8

| Terminal device | Second network device | First network device | Third network device |
|---|---|---|---|

901: The terminal device receives a reference signal from one or more first network devices

902: Determine a first list based on the reference signal

903: Send the first list

904: Determine whether there is a target network device in the first list, and if there is a target network device, perform step 905 and step 906

905: Send first indication information

906: Perform handover to the target network device based on the first indication information

904: Determine whether there is a target network device in the first list, and if there is no target network device, perform step 907 to step 911

907: Send second indication information

908: The terminal device receives a reference signal from one or more third network devices based on the second indication information by using a first beam

909: Determine a second list based on the reference signal

910: Send the second list

911: Determine whether there is a target network device in the second list, and if there is a target network device, perform step 905 and step 906

905: Send first indication information

906: Perform handover to the target network device based on the first indication information

FIG. 9

```
┌──────────┐      ┌──────────────┐    ┌─────────────┐   ┌─────────────┐
│ Terminal │      │Second network│    │First network│   │Third network│
│  device  │      │    device    │    │   device    │   │   device    │
└──────────┘      └──────────────┘    └─────────────┘   └─────────────┘
```

1001: The terminal device receives a reference signal from one or more third network devices by using a first beam

1002: Determine a second list based on the reference signal

1003: Send the second list

1004: Determine whether there is a target network device in the second list, and if there is a target network device, perform step 1005 and step 1006

1005: Send first indication information

1006: Perform handover to a target network device based on the first indication information

1004: Determine whether there is a target network device in the second list, and if there is no target network device, perform step 1007 to step 1011

1007: Send third indication information

1008: The terminal device receives a reference signal from one or more first network devices based on the third indication information

1009: Determine a first list based on the reference signal

1010: Send the first list

1011: Determine whether there is a target network device in the first list, and if there is a target network device, perform step 1005 and step 1006

1005: Send first indication information

1006: Perform handover to the target network device based on the first indication information

FIG. 10

Terminal device
110

Transceiver module
1101

Processing module
1102

FIG. 11

Network device
120

Transceiver module
1201

Processing module
1202

FIG. 12

Communication apparatus 130

Logic circuit
1301

Interface circuit
1302

Memory 1303

FIG. 13

## INTERNATIONAL SEARCH REPORT

| International application No. |
|---|
| **PCT/CN2023/099212** |

**A. CLASSIFICATION OF SUBJECT MATTER**

H04W36/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 无人飞行器, 无人机, UAV, 参考信号, 波束, 测量, 定向, 非波束, 全向, 指示, 切换, 报告, reference signal, RS, beam+, measur+, direction+, omni?direction+, report+, handover+, indicat+

**C. DOCUMENTS CONSIDERED TO BE RELEVANT**

| Category* | Citation of document, with indication, where appropriate, of the relevant passages | Relevant to claim No. |
|---|---|---|
| A | CN 109891769 A (QUALCOMM INC.) 14 June 2019 (2019-06-14) description, paragraphs [0070]-[0105] | 1-27 |
| A | DE 102018101878 A1 (DEUTSCHE TELEKOM AG) 01 August 2019 (2019-08-01) entire document | 1-27 |
| A | US 2019306675 A1 (INTEL CORP.) 03 October 2019 (2019-10-03) entire document | 1-27 |
| A | US 2020280945 A1 (NOKIA TECHNOLOGIES OY) 03 September 2020 (2020-09-03) entire document | 1-27 |
| A | US 2022046528 A1 (VERIZON PATENT AND LICENSING INC.) 10 February 2022 (2022-02-10) entire document | 1-27 |
| A | ERICSSON. "Rel-18 UAV scope" *3GPP TSG-RAN#94-e Tdoc RP-213457*, 17 December 2021 (2021-12-17), section 2 | 1-27 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 July 2023** | **02 August 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/099212**

| Patent document cited in search report | | | Publication date (day/month/year) | Patent family member(s) | | | Publication date (day/month/year) |
|---|---|---|---|---|---|---|---|
| CN | 109891769 | A | 14 June 2019 | EP | 3533153 | A1 | 04 September 2019 |
| | | | | JP | 2019534640 | A | 28 November 2019 |
| | | | | KR | 20190068558 | A | 18 June 2019 |
| | | | | US | 2018123648 | A1 | 03 May 2018 |
| | | | | BR | 112019007860 | A2 | 02 July 2019 |
| | | | | WO | 2018080660 | A1 | 03 May 2018 |
| | | | | IN | 201927009483 | A | 02 August 2019 |
| DE | 102018101878 | A1 | 01 August 2019 | None | | | |
| US | 2019306675 | A1 | 03 October 2019 | None | | | |
| US | 2020280945 | A1 | 03 September 2020 | JP | 2021193801 | A | 23 December 2021 |
| | | | | WO | 2019068957 | A1 | 11 April 2019 |
| | | | | EP | 3692756 | A1 | 12 August 2020 |
| | | | | JP | 2020536453 | A | 10 December 2020 |
| US | 2022046528 | A1 | 10 February 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210690236